(19) **Europäisches Patentamt**
**European Patent Office**
**Office européen des brevets**

(11) **EP 4 576 702 A1**

(12) **EUROPEAN PATENT APPLICATION**

(43) Date of publication:
**25.06.2025 Bulletin 2025/26**

(21) Application number: **24219780.4**

(22) Date of filing: **13.12.2024**

(51) International Patent Classification (IPC):
**H04L 41/0894** (2022.01)    **H04L 41/14** (2022.01)
**H04L 41/16** (2022.01)    **H04L 43/04** (2022.01)
**H04L 41/084** (2022.01)

(52) Cooperative Patent Classification (CPC):
**H04L 41/16; H04L 41/0833; H04L 41/145;
H04L 43/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 IN 202341088122**

(71) Applicant: **Nokia Technologies Oy
02610 Espoo (FI)**

(72) Inventors:
• **FILIPPOU, Miltiadis
  Munich (DE)**
• **NANAVATY, Niraj
  Bangalore (IN)**

(74) Representative: **Nokia EPO representatives
Nokia Technologies Oy
Karakaari 7
02610 Espoo (FI)**

(54) **ENERGY CONSUMPTION-AWARE NETWORK MANAGEMENT**

(57)    A network node transmits at least one measurement configuration to one or more devices for carrying out one or more measurements for determining at least one energy consumption estimate for at least one operation in a plurality of inter-related machine learning operations for network management. The plurality of inter-related machine learning operations comprises (i) one or more operations for collecting data, (ii) one or more data transfer operations to transmit the collected data to the network node, and (iii) one or more data storage operations to store the collected data and (iv) one or more data processing operations to process the collected data. At least one energy consumption estimate is determined using the one or more measurements. At least one network management related configuration is determined for carrying out one or more of the plurality of inter-related machine learning operations on the basis of the at least one energy consumption estimate for controlling energy consumption.

FIG. 11

EP 4 576 702 A1

**Description**

TECHNICAL FIELD

Various example embodiments relate generally to methods, user equipment and network nodes for estimating energy consumed by a plurality of inter-related Machine Learning (ML) operations.

BACKGROUND

ML provides computer systems the ability to carry out tasks, without explicitly being programmed to do so. An example network energy saving use case employing AI/ML (Artificial Intelligence/Machine Learning) in the NG-RAN was introduced in reference [01]. Aiming at reducing the energy footprint of the Radio Access Network (RAN), this use case involves exploitation of User Equipment (UE) offloading from a cell to another in order to decide upon cell activation/de-activation. An ML model may be used for network management purposes, for example to figure out optimal energy saving strategy and generate a handover strategy given various parameters. Other network management and/or network energy saving use cases may be implemented in a network.

While decisions and actions (like switching off a cell) taken based on the output of an ML model could potentially save considerable energy, these decisions may not be made quite often. Besides, many inferences may yield no effective energy saving benefit for the network, while still energy is consumed at ML model side.

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect a network node comprises: at least one processor; and at least one memory storing instructions that, when executed by the at least one processor, cause the network node to carry out at least:

According to a second aspect, a user equipment comprises at least one processor; and at least one memory storing instructions that, when executed by the at least one processor, cause the network node to carry out at least: According to a third aspect, a method comprises:

The network node according to the first aspect may comprise means for carrying out one or more or all steps of the method according to the third aspect. The means may include at least one processor and at least one memory storing instructions that, when executed by the at least one processor, cause the apparatus to carry out one or more or all steps of a method according to the third aspect. The means may include circuitry (e.g. processing circuitry) to carry out one or more or all steps of a method according to the third aspect.

According to a fourth aspect, a method comprises: .

The user equipment according to the second aspect may comprise means for carrying out one or more or all steps of the method according to the fourth aspect. The means may include at least one processor and at least one memory storing instructions that, when executed by the at least one processor, cause the apparatus to carry out one or more or all steps of a method according to the fourth aspect. The means may include circuitry (e.g. processing circuitry) to carry out one or more or all steps of a method according to the fourth aspect.

BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 shows a functional framework according to an example.
FIG. 2 illustrates how operations may be defined for an ML process according to an example.
FIG. 3A shows an example sequence of operations for the training phase.
FIG. 3B shows an example sequence of operations for the inference phase.
FIG. 4 shows a deployment of network entities where at least one of the network entities hosts an ML model configured to generate network energy saving strategy (e.g. predictions and/or decisions) according to an example.
FIG. 5 shows aspects of an energy accounting framework according to an example.
FIGS. 6A-6B shows a flowchart of a method for carrying out data collection according to one or more example embodiments.
FIG. 7 shows a flowchart of a method for model training, model deployment/update and model storage according to one or more example embodiments.

FIGS. 8A-8C shows a flowchart of a method for processing an inference request according to one or more example embodiments.

FIGS. 9A-9C shows a flowchart of a method for providing model performance feedback according to one or more example embodiments.

FIG. 10 shows a flowchart of a method for network and / or model orchestration, administration and management according to one or more example embodiments.

FIG. 11 is a flowchart illustrating a method according to an example.

FIG. 12 is a flowchart illustrating a method according to an example.

FIG. 13 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

## DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

The embodiments disclosed herein may be implemented for radio telecommunication systems, including a fifth generation (5G) network or 6G network. Prior or subsequent generations of radio telecommunication systems may be concerned by the embodiments disclosed herein.

In the following, different exemplary embodiments will be described using, as an example of an access architecture to which the exemplary embodiments may be applied, a radio access architecture based on long term evolution advanced (LTE Advanced, LTE-A) or new radio (NR, 5G), without restricting the exemplary embodiments to such an architecture, however. The exemplary embodiments may also be applied to other kinds of communications networks having suitable means by adjusting parameters and procedures appropriately. Some examples of other options for suitable systems may be the universal mobile telecommunications system (UMTS) radio access network (UTRAN or E-UTRAN), long term evolution (LTE, the same as E-UTRA), wireless local area network (WLAN or Wi-Fi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

In the context of [01]:

- "data collection" refers to data collected from the network nodes, management entity or UE, as a basis for AI/ML model training, data analytics and inference.
- "AI/ML model" refers to a data driven algorithm by applying machine learning techniques that generates a set of outputs consisting of predicted information and/or decision parameters, based on a set of inputs.
- "AI/ML Training" refers to an online or offline process to train an AI/ML model by learning features and patterns that best present data and get the trained AI/ML model for inference.
- "AI/ML Inference" refers to a process of using a trained AI/ML model to determine a network management strategy, e.g. make a prediction or guide the decision based on collected data and AI/ML model.

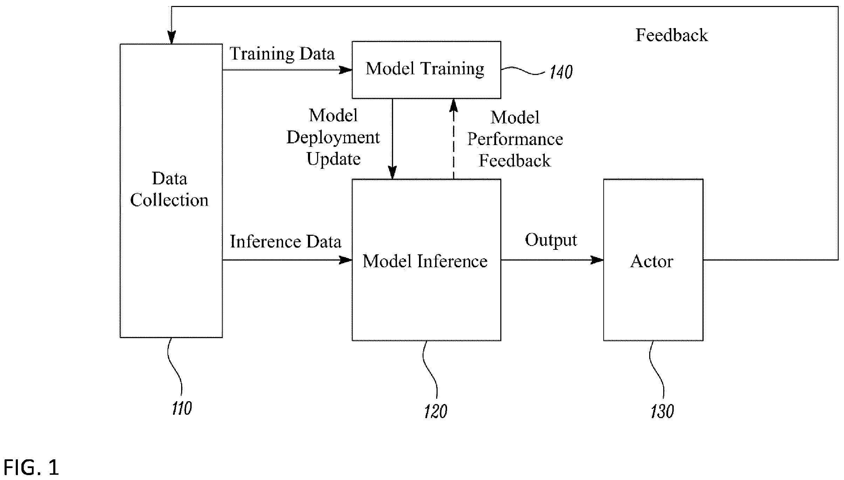

FIG. 1 shows a functional framework according to an example.

This functional framework introduced by [01] (See [01], section 4.2) is shown herein in the FIG. 1. The functional framework includes the following functions: Data Collection (function) 110, Model Inference (function) 120, Actor (function) 130 and Model Training (function) 140. This functional framework is an example of ML framework for network management. This example of ML framework is applicable to many use cases, including energy saving use cases.

The Data Collection 110 may provide Training Data to the Model Training 140. The Data Collection 110 may provide Inference Data to the Model Inference 120. The Model Inference 120 may generate an Output for the Actor 130. The Actor 130 may generate Feedback provided to the Data Collection 110. The Model Training 140 may update or deploy a trained mode into the Model Inference 120. The Model Inference 120 may provide Performance Feedback to the Model Training 140.

Data Collection 110 may refer to a function that provides input data to Model training and Model inference functions.

Examples of input data may include measurements from UEs or different network entities, feedback from Actor, output from an AI/ML model.

Training Data may refer to data needed as input for the AI/ML model Training function. Inference Data may refer to data needed as input for the AI/ML model Inference function.

Model Training 140 may refer to a function that carries out the AI/ML model training, validation, and testing which may generate model performance metrics as part of the model testing procedure. The Model Training function is also responsible for data preparation (e.g., data pre-processing and cleaning, formatting, and transformation) based on Training Data delivered by a Data Collection function, if required.

Model Deployment/Update: Used to initially deploy a trained, validated, and tested AI/ML model to the Model Inference function or to deliver an updated model to the Model Inference function.

Model Inference 120 may refer to a function that provides AI/ML model inference output (e.g., predictions and/or decisions). Model Inference 120 may provide Model Performance Feedback to Model Training 140 when applicable. The Model Inference 120 is also responsible for data preparation (e.g., data pre-processing and cleaning, formatting, and transformation) based on Inference Data delivered by a Data Collection function, if required.

The output of Model Inference 120 may correspond to inference output of the AI/ML model produced by a Model Inference function, e.g. based on one or more inference requests.

The Model Performance Feedback may be used for monitoring the performance of the AI/ML model, when available.

The Actor 130 is a function that receives the Output from the Model Inference 120 and triggers or carries out corresponding actions. The Actor may trigger actions directed to other entities or to itself.

The Feedback may refer to information that may be needed to derive training data, inference data or to monitor the performance of the AI/ML model and its impact to the network through updating of KPIs and performance counters.

Section 5.1.1 of reference [01] provides a description of an example network energy saving use case and feedback to optimize the performance of AI/ML network energy saving model.

As an example, to predict the optimized network energy saving decisions, NG-RAN may need following information as input data for AI/ML network energy saving:

From a RAN node that hosts the AI/ML model and takes energy saving actions, considering the output of the AI/ML model:

- UE mobility/trajectory prediction;
- Current/Predicted Energy efficiency;
- Current/Predicted resource status.

From the UE:

- UE location information (e.g., coordinates, serving cell ID, moving velocity) interpreted by gNB implementation when available;
- UE measurement report (e.g., UE RSRP, RSRQ, SINR measurement, etc), including cell level and beam level UE measurements.

From neighbouring NG-RAN nodes:

- Current/Predicted energy efficiency;
- Current/Predicted resource status;
- Current energy state (e.g., active, high, low, inactive).

The AI/ML network energy saving model can generate following information as output (see [01], section 5.1.2.5):

- Energy saving strategy, such as recommended cell activation/deactivation;
- Handover strategy, including recommended candidate cells for taking over the traffic;
- Predicted energy efficiency;
- Predicted energy state (e.g., active, high, low, inactive);

To optimize the performance of AI/ML network energy saving model, following feedback information can be considered to be collected from NG-RAN nodes (see [01], section 5.1.2.6):

- Resource status of neighbouring NG-RAN nodes;
- Energy efficiency;
- UE performance affected by the energy saving action (e.g., handed-over UEs), including bitrate, packet loss, latency;
- System KPIs (e.g., throughput, delay, RLF of current and neighbouring NG-RAN node);

ML network energy saving process potentially save strategy. While decisions like switching off a cell could potentially save considerable energy, these decisions are not made quite often. Besides, many inferences may yield no or only lower energy saving benefit for the network, as compared to the energy consumed along the ML process, i.e., considering all ML model lifecycle events between the start of two consecutive ML model training procedures, i.e., when the ML model is ready to provide inference output that can be considered by an actor network entity before deciding upon a network energy saving action. Further, there are many other energy saving schemes that are already implemented or being implemented e.g., micro-DTX.

In all of the ML energy saving use cases, it appears useful to keep track of total energy consumed in the entire ML process itself, starting from ML model training, ML model storage, ML model inference to training/inference data collection, data transfer, data processing, data storage and access and also the total energy saved due to the decisions made based on the ML model output of each inference request.

For the network energy saving use case, it appears also useful to figure out if there is net energy profit (i.e., net energy saving) or a net energy loss by considering: (i) the energy saved due to the application of energy saving decisions made by an actor network entity considering the outputs (e.g. predictions and/or decisions) issued by the ML model and (ii) the energy consumed during the entire ML model lifecycle itself, including the UE, the RAN nodes or other devices involved in the ML framework in all phases of the ML process.

The ML framework may correspond to a set of network nodes configured to cooperate to implement an ML process based on an ML model that generates one or more outputs. An ML process corresponds to a plurality of inter-related ML operations. A plurality of inter-related ML operations thus correspond to operations that are carried out by a set of network nodes to configure and/or run an ML model. In the present description, ML process, ML model and inter-related ML operations for network management are disclosed.

An ML process may correspond to a computer-executed process or computer-executed process that relies on or involves the execution of an ML model. The ML process may include a plurality of phases, e.g. a training phase and an inference phase. Each phase corresponds to a set of one or more operations that are executed (e.g. in sequence and / or in parallel or according to any other sequencing) during the considered phase.

The ML framework includes all the network nodes that are involved in the execution of one or more operations of ML process. The ML framework may include for example one or more UEs and one or more NG-RAN nodes. A RAN node may be for example a gNB or a gNB-Central Unit (CU) and gNB-DU in the split gNB architecture where these RAN nodes can be fixed or moving and corresponding to coverage or capacity cells. The ML framework may also include an OAM function and / or a SMO function. The ML framework may also include one or more network functions in the core network.

A mechanism for logging and tracking the total energy consumed with respect to a deployed ML process is disclosed.

To evaluate end-to-end model performance of an ML process for network energy saving in terms of net energy balance (a net energy profit if net energy is saved (positive) or a net energy loss is net energy is lost (negative)), the below quantities Q1, Q2, Q3 may be computed.

- A quantity Q1 which is the sum of: i) total network energy consumed Q1a in the entire ML framework of the ML process and ii) the associated increase Q1b in energy consumption elsewhere in the network (e.g. due to action(s) performed by the Actor), where quantities Q1a and Q1b are accounted for during a net energy monitoring period, e.g., between the start of two consecutive ML model training processes, with Q1= Q1a+ Q1b.
- A quantity Q2 which is the total network energy saved based on energy saving decisions generated by the ML model during inference, where quantity Q2 is accounted for during the same net energy monitoring period as quantities Q1a, Q1b and Q1.
- A quantity Q3 computed as Q3=Q2-Q1, where quantity Q3 is accounted for during the same net energy monitoring period as quantities Q1a, Q1b, Q1 and Q2.

The quantity Q3 represents a net energy balance: if Q3 is positive, there is a net energy profit and if Q3 is negative, there is a net energy loss.

If the quantity Q3 is positive, the ML network energy saving framework is operating with "net energy profit" and the network could continue to use the same version of the ML model and the same ML model deployment option in the network for assisting the actor network entity with energy saving recommendations in the form of inference output (e.g. predictions and/or decisions). As one of possible alternatives, it could trigger a network manager entity assessing quantity Q3 to carry out corrective actions (e.g. network and / or model orchestration and management actions) to further increase the "net energy profit" in subsequent net energy monitoring periods.

Otherwise, if the quantity Q3 is negative, the ML network energy saving framework is operating with "net energy loss" and this could trigger a network manager entity assessing quantity Q3 to find energy consumption bottlenecks in the ML process and consider them to carry out corrective actions (e.g. a network and / or model orchestration and management actions) to change the "net energy loss" to a "net energy profit" in subsequent net energy monitoring periods. An example of a corrective action (e.g. a network and / or model orchestration and management action) is for the ML model to be: relocated or decommissioned or deactivated (e.g. after a single or multiple consecutive "net energy loss" evaluations) or deactivated during a given time period.

Some examples of correction actions may include:

- 1. increasing energy saving periods provided network KPIs are within defined thresholds;
- 2. decreasing subsequent training time;
- 3. decreasing subsequent training data quantity;
- 4. carrying out training and inference on more energy efficient compute node;
- 5. deploying more energy efficient model, if available.

In embodiments, an Energy Accounting Function (EAF) is provided for one or more network nodes that belong to the ML network energy saving framework. The EAF is a function configured to estimate and separately log the different energy consumptions at the level of the network node, all these energy consumption estimates contributing to the computation of the quantities Q1 and Q2 defined above.

Each energy consumption estimate may be determined by using various methods: by carrying out one or more measurements, by carrying out a computation based on one or more quantities and / or measurement(s), by using a prediction function that generates the energy consumption estimate, etc.

In embodiments, an EAF may be configured to estimate and log the energy consumption of every operation in the ML process such that energy consumption estimates are generated operation by operation. The estimate(s) may be used to compute quantity Q1a.

In embodiments, an EAF may be configured to estimate and log any energy consumption increase at network nodes in the vicinity of the actor network node due to the implementation of a network energy saving action by the actor network node. The estimate(s) may be used to compute quantity Q1b.

In embodiments, an EAF may be configured to estimate and log the energy consumption saving at the actor network node due to the implementation of a network energy saving action by the actor network node. This may be used to compute quantity Q2.

In embodiments, an EAF may be configured to compute a total energy consumption for a plurality of inter-related ML operations and to generate an energy consumption report including the computed total energy consumption for the execution of the inter-related ML operations. The EAF may be configured to send the energy consumption report to another network node.

In embodiments, an EAF may be configured to compute a total energy consumption estimate for a plurality of operations and to generate an energy consumption report including the total energy consumption estimate. The EAF may be configured to send the energy consumption report to another network node.

In embodiments, an EAF may be configured to aggregate energy consumption estimates for a plurality of operations and to generate an energy consumption report including the aggregated energy consumption estimates. The EAF may be configured to send the energy consumption report to another network node.

In one or more network nodes, an EAF (e.g. a main EAF) may be configured to calculate quantity Q3 on the basis of all the energy consumption estimates contributing to the computation of the quantities Q1 and Q2 defined above.

For example, a main EAF instance, deployed at or accessible by a network management entity, e.g., deployed at the OAM/SMO, may obtain all relevant energy consumption and energy saving estimates, compute Q3. These energy consumption data may be stored and maintained in a data structure, e.g., in the form of a tree or a graph. Such net energy consumption data can then be useful for the network management entity to identify which devices of the network and/or which of the inter-related ML operations significantly contribute most (positively and/or negatively) to the monitored net energy balance at various levels, for example at UE, RAN and CN level.

The inter-related ML operations for which energy consumption is estimated may be categorized in categories. The categories may be used to carry out an energy consumption analysis category per category.

As a first example, the inter-related ML operations for which energy consumption is estimated may be categorized in three parts which energy may be consumed:

- the model part: this part includes model-related operations; these model-related operations include operations involving the ML model, e.g. operations on the ML model or operations performed by the ML model; these model-related operations may include: model training, model deployment, model update, model storage, model inference, model performance feedback preparation and model performance feedback transfer;

- the data part: this part including data-related operations; these data-related operations include operations on data that do not involve the ML model; these data - related operations include for example: data collection (training data collection, inference data collection, feedback (e.g., ground truth) data collection), data storage by a node, data transfer from one network node to another network node, and data processing by a network (e.g. data pre-processing before the data are used by the ML model); and
- the actor part: this part including actor-related operations; these actor-related operations include operations like taking actions based on the ML model output.

According to a second example, a category may correspond to a phase: e.g. a first category for the learning phase, a second category for the inference phase and a third category for the feedback phase.

The first and second examples may be combined in various ways to define categories such as: a first category for the model part during training phase, a second category for the model part during inference phase, etc.

Defining categories of operations allows to compute total energy consumption estimates per category and / or to carry out analysis (e.g. statistical analysis) of energy consumption per category.

The definition of the categories may depend on the way the energy consumption estimates are to be used, analyzed, aggregated and / or summed up.

The definition of the categories may depend on the analysis of the energy consumption to be performed. For example, energy consumed for data collection or data transfer may be dependent on the network load, radio conditions and radio resource availability and not only on the ML process. Energy consumed for data collection or data transfer may require an analysis separate from the energy consumption by the model-related operations that is only due to ML process.

In embodiments, each network node in the ML framework is configured to estimate (e.g. by carrying out measurements) and log energy consumed by itself for the execution of one or more operations of the ML process. Each network node in the ML framework is configured to transfer to a next node (UE to NG-RAN node, NG-RAN node to OAM/SMO and so on) (i) the measurements for determining at least one energy consumption estimate and/or (ii) the energy consumption estimate(s): the measurements and/or the energy consumption estimate(s) may be used for aggregate computation of quantities Q1a, Q1b, Q1, Q2 and Q3.

Each energy consumption estimate may be logged with at least one associated timestamp: a timestamp that indicates a time at which the energy was consumed or a time at which the energy consumption estimate was generated, or timestamps indicating start and end of concerned operation.

Each energy consumption estimate may be logged with an associated operation identifier that identifies the concerned operation in the plurality of inter-related ML operations defining the ML process.

For a data transfer operation, an energy consumption estimate may be logged with a communication interface identifier that identifies the communication interface (e.g. O1 interface, Xn interface, AS (Access Stratum) interface, etc.) between two network nodes for the considered data transfer. A default value could be used for other types of operation.

The O1 Interface is a logical connection between all "O-RAN Managed Elements (MEs)" and the "management entities" within a SMO framework.

Xn interface exists between base stations (e.g. between gNB-gNB, between (gNB)-(ng-eNB) and between (ng-eNB)-(ng-eNB)). Xn is a network interface between NG-RAN nodes.

Each energy consumption estimate may be logged with at least one associated network node identifier that identifies the device(s) or entity(ies)(s) (e.g., network entities(s) and/or UEs and/or NG-RAN nodes) impacted by the considered energy consumption. For example, for an energy consumption estimate for a data transfer operation, the energy consumption estimate may be logged with a device identifier (or entity identifier) that identifies the source device (or source entity) and a device identifier that identifies the target device (or target entity). For example, for an energy consumption estimate for a model-related operation, the energy consumption estimate may be logged with a device identifier (or entity identifier) that identifies the device (or entity) running the ML model.

One or more network nodes in the ML framework may be configured to report logged energy consumption estimates to another network node in the ML framework. One or more network nodes in the ML framework may be configured to collect and / or analyze all energy consumption estimates, for example to determine the quantity Q3 corresponding to a net energy balance (representing either a net energy saving or a net energy loss).

Each energy consumption report may include part or all of the data logged with the energy consumption estimate(s): e.g. timestamp(s), operation identifier, communication interface identifier, device identifier(s) (or entity identifier(s)), model identifier.

In embodiments the network nodes in the ML framework are organized in a transmission chain or transmission tree, to support transmission from leaf node(s) to a root node, such that each network node in the ML framework may be configured to report logged energy consumption estimates to a next network node in the transmission chain / transmission tree until all logged energy consumption estimates are received by the root node (e.g., a network management entity) that is configured to determine the quantity Q3 for the full ML framework based on all the received energy consumption estimates.

A network node that generates a plurality of energy consumption estimate(s) may generate an energy consumption report for the plurality of energy consumption estimate(s) and may send the energy consumption report to a network node at a next level. In the energy consumption report, the plurality of energy consumption estimate(s) may be: summed up to generate a single-valued total energy consumption estimate representing the considered energy consuming operations or be aggregated and maintained as separate information elements of the energy consumption report.

This allows to trace energy consumptions for all functions and steps of the end-to-end lifecycle of the ML process, e.g. by addressing model, data and actor parts.

Also it is possible to manage and calculate the total energy consumed with respect to a deployed ML model for its whole process and all phases. This helps a network management entity to predict the net energy balance Q3 due to ML model deployments.

A fine-grained (component-wise) analysis of the energy consumption of an ML process may be performed for each specific ML model addressing the network energy saving use case (e.g., issuing decisions or recommendations on cell activation/ de-activation, to address the network energy saving use case).

The ML process (or each phase of the ML process) may be split into a plurality of inter-related ML operations such that the fine-grained analysis can be performed operation by operation, in relation to each of the operations defined for one of the phases of the ML process. The phases of the ML process may include at least a training phase and an inference phase, a feedback phase, etc. Other phases may be defined as needed.

The fine-grained analysis may for example be performed in relation to one or more specific functions of the functional framework: model training, model deployment, model update, model storage, model inference, model performance feedback preparation and model performance feedback transfer, as well as data collection, data transfer, data storage and data processing operations.

The fine-grained analysis may for example be performed for energy consumed during a specific time interval (referred to herein as the net energy balance monitoring period): for example between the start of a training phase and the end of an inference phase or between the start of a training phase and the end of a feedback phase. The fine-grained analysis may be performed to figure out if there is net energy saving or loss based on the quantity Q3 for a given part of the RAN during a given net energy balance monitoring period.

The various embodiments disclosed herein are applicable to all types of ML model deployments in a network, e.g. NW-side, UE-side, two-sided ML models, and collaborative ML schemes (e.g., Federated Learning, distributed learning, Transfer Learning).

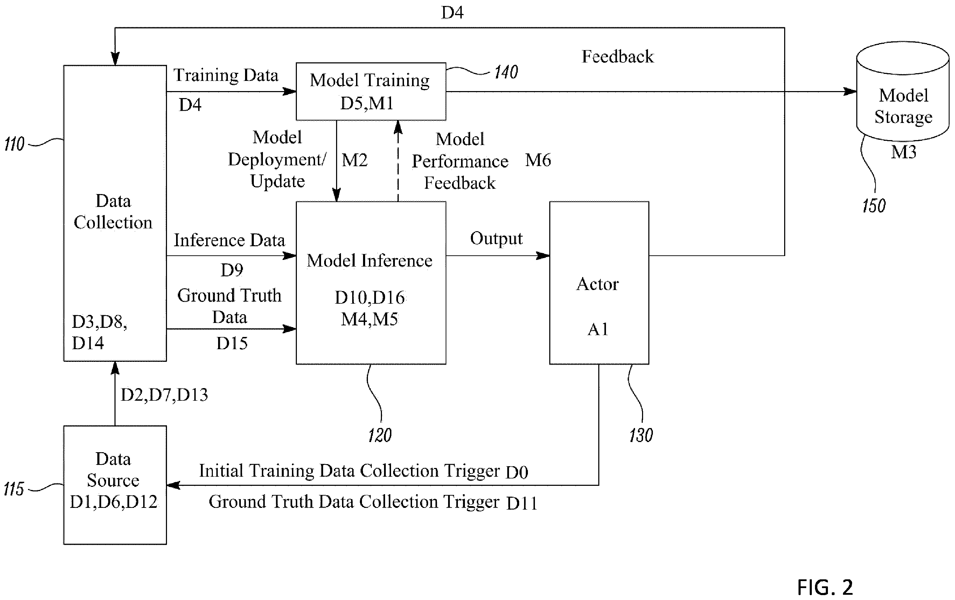

FIG. 2 illustrates a plurality of inter-related ML operations defined for an ML process according to an example.

The inter-related ML operations are defined for the model part, the data part and the actor part respectively. For each of these inter-related ML operations an energy consumption may be estimated, e.g. by the network node that carries out the considered operation.

In the example of FIG. 2, the inter-related ML operations are proposed on top of the Functional Framework described by reference to FIG. 1. The Functional Framework of FIG. 2 includes two additional functions: a data source 115 and a model storage 150. The data source 115 may generate and provide the generated data to the Data collection 110. The model storage 150 may store one or more trained instances of the ML model.

The distribution of the functions of the Functional Framework in the network nodes may vary. Each of the functions of the Functional Framework may be located in a respective network node of the Functional Framework. Alternatively a given network node may carry out one or more of functions of the Functional Framework.

For example:

- - Model Training is located in the OAM and Model Inference is located in the gNB; or
- - Model Training and Model Inference are both located in the gNB.

In case of CU-DU split architecture, the following solutions are possible:

- - Model Training is located in the OAM and Model Inference is located in the gNB-CU; or
- - Model Training and Model Inference are both located in the gNB-CU.

In the example of FIG. 2, the model part may include the following model-related operations:

- M1 - model training
- M2 - model deployment/update
- M3 - model storage
- M4 - model inference and transmission of the output to the Actor; alternatively, another operation M4b or D17 may be defined for the transmission of the output to the Actor;

- M5 - model performance feedback preparation (ground truth verification against the inference output)
- M6 - model performance feedback transfer

Data part may include the following data-related operations.

For training data:

- D0 - (initial) training data collection trigger by a certain actor
- D1 - training data collection by the data source (including retrieval of historical data)
- D2 - training data transfer from the data source to the data collection function (optional, useful only if data collection function and data source function are performed by different network nodes)
- D3 - (unprocessed) training data storage at data collection function
- D4 - training data transfer from the data collection function to the model training function (optional, useful only if data collection function and model training function are not performed by a same network node). D4 may include feedback from Actor as well, or, alternatively, another operation D18 may be defined for the feedback from the Actor.
- D5 - training data preparation (pre-processing and cleaning, formatting, and transformation i.e., to prepare the data for the training) at model training function.

For inference data:

- D6 - inference data collection by the data source
- D7 - inference data transfer from the data source to the data collection function (optional, useful only if data collection function and data source function are not performed by a same network node)
- D8 - (unprocessed) inference data storage at data collection function
- D9 - inference data transfer from the data collection function to the model inference function (optional, useful only if data collection and model inference are not performed by a same network node)
- D10 - inference data preparation (pre-processing and cleaning, formatting, and transformation i.e., to prepare the data for the inference) at model inference function
- For ground truth data:
- D11 - ground truth data collection trigger by a certain Actor
- D12 - ground truth data collection by the data source
- D13 - ground truth data transfer from the data source to the data collection node (optional, useful only if data collection function and data source function are not performed by a same network node)
- D14 - (unprocessed) ground truth data storage at data collection function
- D15 - ground truth data transfer from the data collection node to the node verifying ground truth against the inference output (optional, useful only if data collection and model inference are not performed by a same network node)
- D16 - ground truth data preparation (pre-processing and cleaning, formatting, and transformation i.e., to prepare the data for verification against the inference output) at model inference function.

The actor part may include the following actor-related operation:

- A1 - action taken by Actor (e.g., NG-RAN node).

Each of the above operations has its energy footprint that may be measured or computed separately.

In the example of FIG. 2 and the above definition of operations, it is assumed that the Data Source function, Data Collection function and Model Training function are performed by respective and physically distinct network nodes.

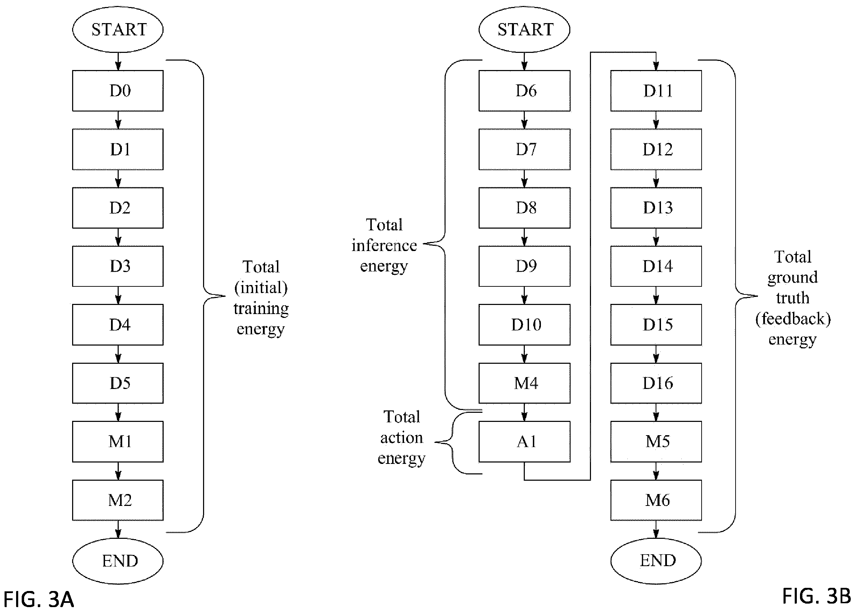

FIG. 3A shows an example of inter-related ML operations for the training phase. The sequence includes operations D0, D1, D2, D3, D4, D5, M1 and M2 as defined herein. This is only an example of a sequence of operations and the order in which the inter-related ML operations are executed may vary in various ways.

FIG. 3B shows an example of inter-related ML operations for the inference phase, the sequence of operations being for addressing an inference request. The sequence includes operations D6, D7, D8, D9, D10, M4, A1, D11, D12, D13, D14, D15, D16, M5, M6 as defined herein. The subsequence D6, D7, D8, D9, D10, M4 allows to estimate the total energy consumed by the inference. The operation A1 allows to estimate the total energy consumed by the action A1. The subsequence D11, D12, D13, D14, D15, D16, M5, M6 allows to estimate the total energy consumed by the feedback. This is only an example of a sequence of operations and the order in which the inter-related ML operations are executed may vary in various ways.

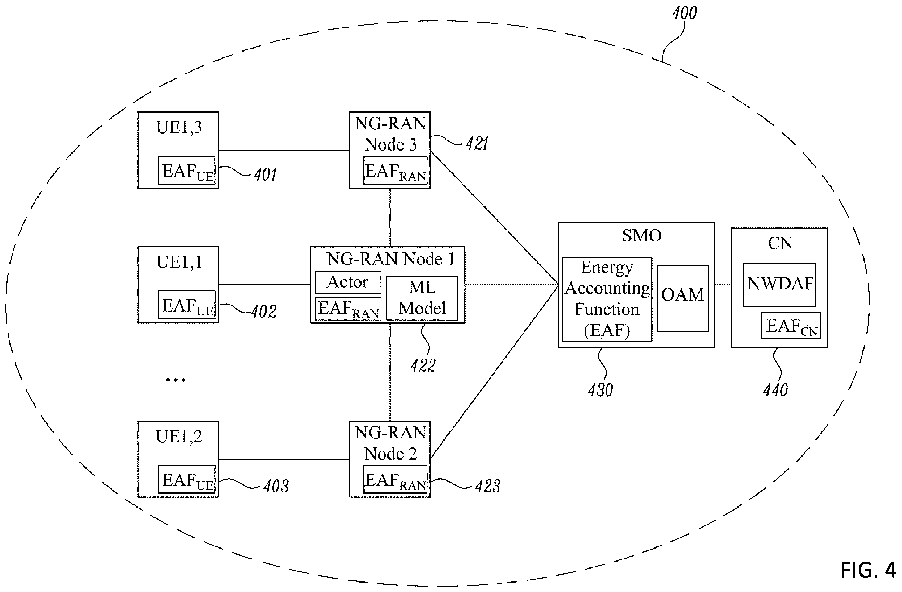

FIG. 4 shows a deployment of network entities where at least one of the network entities hosts an ML model configured to generate network energy saving strategy (e.g. predictions and/or decisions) according to an example.

FIG. 4 illustrates which network entities are configured to carry out energy consumption accounting and to log corresponding events according to an example.

The functions of the ML framework are implemented by a set 400 of network nodes including: UEs 401 to 403; NG-RAN nodes 421 to 423; SMO 430 and a CN node 440. Energy logging may be limited to this set 400 of network nodes, and each of these network nodes includes an Energy Accounting Function, EAF.

As indicated in the FIG. 4, this set 400 of network nodes may include:

- the NG-RAN node 422 may host the ML model of focus (i.e., the ML model dedicated to issue output triggering a cell (de)-activation action) and the actor function,
- the neighboring NG-RAN nodes 421, 423, the energy state of which may be impacted depending on the network energy saving action decided at the NG-RAN node where the ML model is deployed (for example if the cell of the NG-RAN node 422 is deactivated);
- UEs 401 to 403 located respectively in a cell of one the NG-RAN nodes 421 to 423;
- the SMO 430, including the OAM function, corresponding to this part of the RAN deployment;
- optionally other Network Functions (NFs) may be present in a CN node 440, such as Network Data Analytics Functions (NWDAFs) issuing analytics relevant to this focused part of the RAN.

For each network node of this part of the network, an Energy Accounting Function (EAF) may be deployed in a root node (e.g., at the OAM/ in SMO domain) which is the accumulation point of all relevant energy consumption estimates.

The accumulation of relevant energy consumption estimates may be performed for a time interval between a) the time instant when the ML model is trained/ fine-tuned and ready for inference operation and b) the time instant when the ML model is decided to be re-trained/ fine-tuned.

On top of the EAF entity, an EAF instance may be deployed to account for the local energy consumption/saving events at a local level, i.e. in each network node: i) at involved UEs, ii) at involved/ impacted NG-RAN nodes, and iii) possibly at involved part of the CN.

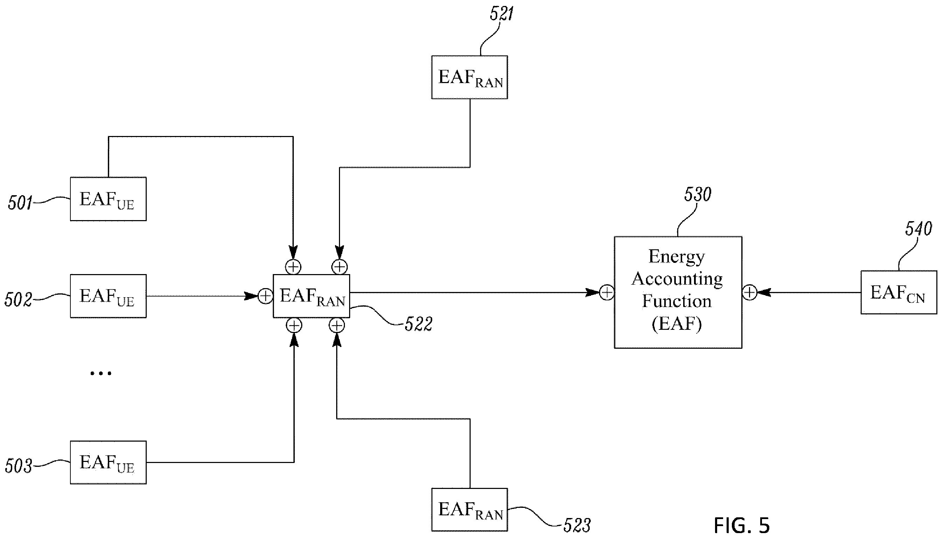

FIG. 5 illustrates energy accounting aspects according to an example that is applicable to the set 400 of network nodes disclosed by reference to FIG. 4.

Each of EAFs 511 to 513 is for example located in a UE. Each of EAFs 521 to 523 is for example located in a RAN node. EAF 530 is for example located in a SMO entity. EAF 540 is for example located in a CN entity.

Each involved EAF (e.g. 511 to 513, 521 to 523, 530, 540) in a network node or user equipment may carry out measurements for determining energy consumption estimate(s) (e.g. based on measurement configuration) and/or generate energy consumption estimate(s) for locally consumed energy, i.e. energy consumed by the network node itself. The measurements for energy consumption estimation and/or energy consumption estimate(s) may be transmitted to another network node and/or another user equipment.

An EAF that generates or receives a plurality of energy consumption estimates may generate (i) an accumulated energy consumption estimate by summing up the plurality of energy consumption estimates or (ii) an aggregated energy consumption estimate by aggregating the plurality of energy consumption estimates while keeping these estimates as separate information values.

An EAF (e.g. 521 to 523, 530) may receive measurements for determining energy consumption estimate(s) and/or energy consumption estimate(s) from an EAF in another network node at a previous level in the transmission chain or transmission tree.

An EAF that generates or receives energy consumption estimate(s) for energy consumed by another network node may compute a total energy consumption estimate by summing up these energy consumption estimate(s) for energy consumed by this other network node with the energy consumption estimate(s) for energy consumed by itself. An EAF that generates or receives energy consumption estimate(s) for energy consumed by another network node may aggregate the energy consumption estimate(s) for energy consumed by the other network node with the energy consumption estimate(s) for energy consumed by itself while keeping these estimates as separate information values.

An EAF (e.g. 511 to 513, 521 to 523) may report measurements for determining energy consumption estimate(s) and/or energy consumption estimate(s) to a network node at a next level in the transmission chain or transmission tree.

At least one EAF (e.g. 530) may compute the quantity Q3 according to any embodiment described herein.

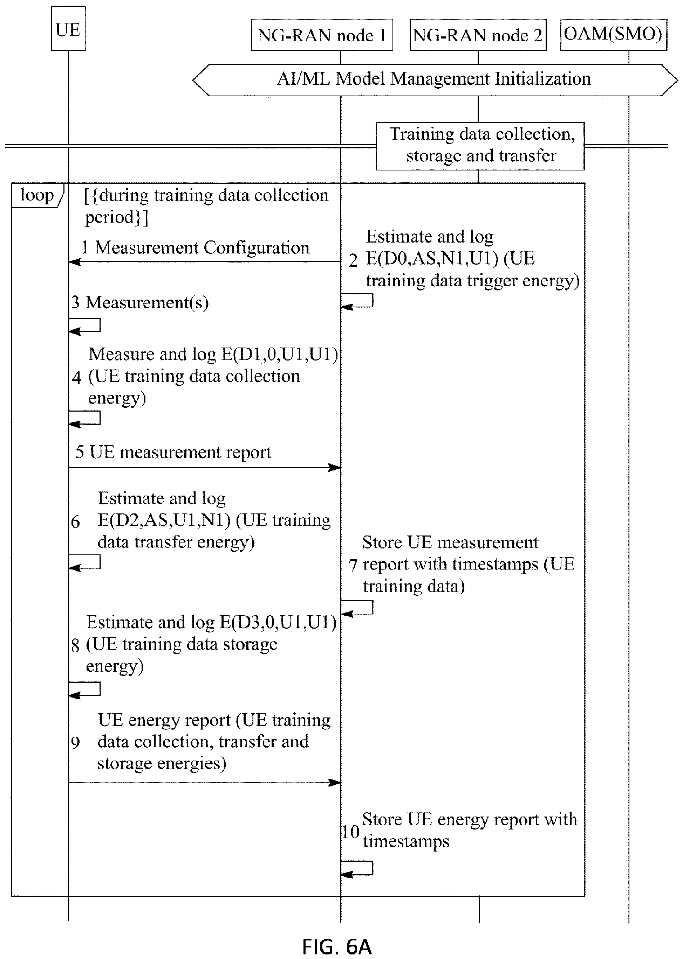

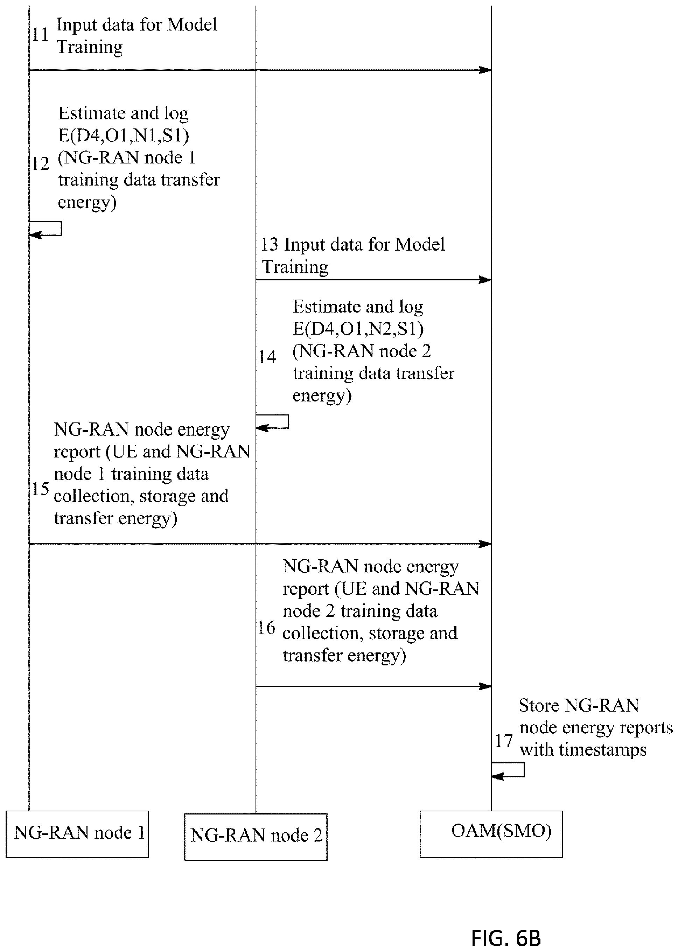

FIGS. 6A-6B, 7, 8A-8C, 9A-9C show flowcharts illustrating a complete ML process including an example of inter-related ML operations according to one or more example embodiments.

The steps of the methods disclosed by reference to these figures may be implemented by a UE, NG-RAN nodes 1 and 2 (designated hereafter by node 1 and node 2 respectively) and OAM/SMO function according to any example described herein. Identifiers of these network nodes are noted respectively U1, N1, N2, S1.

These figures correspond to an example in which the trained ML model is executed by node 1 and the OAM or SMO carries out training.

Further, the below notations are used herein for defining the energy consumption estimates determined for an ML process:

- Mi denotes the identifier of the model-related operation (e.g., model training), for example as defined shown in FIG. 2;
- Di denotes the identifier of the data-related operation (e.g., data transfer), for example as defined shown in FIG. 2;
- Ai denotes the identifier of the action taken by the actor (e.g., cell de-activation), for example as defined shown in FIG. 2;
- j denotes the involved communication interface (i.e., O1 interface, Xn interface, AS interface) or takes the value of zero in case of local operation (e.g., model training), as applicable to the respective domains (i.e., model, data, actor)
- k denotes the identifier of the source node (e.g., NG-RAN node 1) as applicable to the respective domains (i.e., model, data, actor)
- I denotes the identifier of the target node (e.g., NG-RAN node 2) as applicable to the respective domains (i.e., model, data, actor)
- $E(Mi, j, k, I)$ denotes an energy consumption estimate for operation Mi, communication interface j, source node k and target node I;
- $E(Di, j, k, I)$ denotes an energy consumption estimate for operation Di, communication interface j, source node k and target node I;
- $E(Ai, j, k, I)$ denotes an energy consumption estimate for operation Ai, communication interface j, source node k and target node I.

FIGS. 6A-6B shows a flowchart of a method for carrying out data collection according to one or more example embodiments.

The steps of the method may be implemented by a UE, NG-RAN nodes 1 and 2 (hereafter nodes 1 and 2) and OAM/SMO function according to any example described herein. Identifiers of these network nodes are noted respectively U1, N1, N2, S1.

Step 1: measurement configuration is sent by node 1 to UE. This measurement configuration may be RRC configuration signal. The measurements to be made may for example be based on reference signals.

The measurement configuration may contain measurement configuration for carrying out one or more measurements for determining at least one energy consumption estimate for at least one operation in a plurality of inter-related machine learning operations for network management.

The measurement configuration may include identifier of the operation(s) for which energy consumption estimate has to be determined. The measurement configuration may include units in which the measurements and/or the energy consumption estimate have to be generated.

Step 2: node 1 estimates and logs energy consumption E(D0, AS, N1, U1) (UE training data trigger energy) for the execution of step 1.

Step 3: UE carries out the requested measurements.

Step 4: UE estimates and logs energy consumption E(D1,0,U1,U1) (UE training data collection energy) for the execution of step 3.

Step 5: UE transmits measurement report to node 1. The measurement report may include measurements such as SINR, signal quality, etc, which may be used as training data.

Step 6: UE estimates and logs energy consumption E(D2,AS,U1,N1) (UE training data transfer energy) for the execution of step 5.

Step 7: Node 1 stores the UE measurement report, including training data, in association with timestamps of measurements.

Step 8: UE estimates and logs energy consumption E(D3,0,U1,U1) (UE training data storage energy).

Step 9: UE transmits an energy consumption report to node 1 related to UE training data collection, transfer and storage energy based on the estimates obtained in steps 4, 5 and 8. A total energy consumption estimate (i.e. accumulate energy consumption estimate) may be sent as a single value (e.g. a sum of the estimates) or these estimates may be kept separated and merely aggregated in the energy consumption report.

Step 10: Node 1 stores the energy consumption report received from UE in step 9 in association with timestamps. The timestamps may be present in the energy consumption report or be generated by the recipient Node 1. Node 1 may timestamp the report once node 1 receives the report. The timestamps may be timestamps of generation of the estimate and/or timestamps of receipt of the energy consumption report.

Step 11: Node 1 transmits input data for Model Training function to OAM/SMO using O1 interface.

Step 12: Node 1 estimates and logs energy consumption E(D4,O1, N1,S1) (node 1 training data transfer energy) for the execution of step 11.

Step 13: Node 2 transmits input data for Model Training function to OAM using O1 interface

Step 14: Node 2 estimates and logs energy consumption E(D4,O1, N2,S1) (node 2 training data transfer energy) for the execution of step 13.

Step 15: Node 1 transmits an energy consumption report to OAM/SMO related to node 1 training data collection, transfer and storage based on the estimates obtained in steps 2, 12, and the report received in step 9. The energy consumption report may include other energy consumption estimates received from UE(s) served by node 1 and / or other energy consumption estimates generated by node 1. A total energy consumption estimate (i.e. accumulated energy consumption estimate) may be sent or these estimates may be kept separated and merely aggregated in the sent energy consumption report.

Step 16: Node 2 transmits an energy consumption report to OAM/SMO related to training data collection, transfer and storage based on the estimate obtained in steps 14. The energy consumption report may include other estimates received from UE(s) served by node 2. A total energy consumption estimate (i.e. accumulated energy consumption estimate) may be sent or these estimates may be kept separated and merely aggregated in the sent energy consumption report.

Step 17: OAM/SMO stores the energy consumption reports received in steps 15 and 16 from node 1 and node 2 respectively.

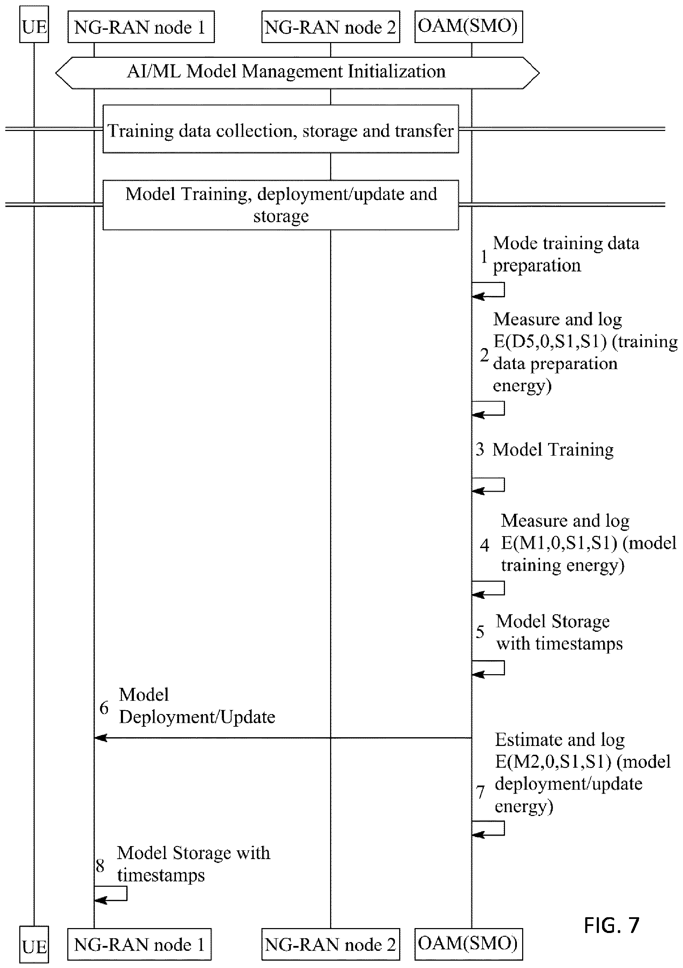

FIG. 7 shows a flowchart of a method for model training according to one or more example embodiments.

Step 1: OAM/SMO carries out model training preparation.

Step 2: OAM/SMO estimates and logs energy consumption E(D5,0,S1,S1) (training data preparation energy) for the execution of step 1.

Step 3: OAM/SMO carries out model training.

Step 4: OAM/SMO estimates and logs energy consumption E(!v)1,0,S1,S1) (model training energy) for the execution of step 3

Step 5: OAM/SMO stores the trained model with timestamps corresponding to time when model training ends, time when model storage starts and time when model storage ends.

Step 6: OAM/SMO transmits the trained model to node 1, to deploy a new model or update an existing model.

Step 7: OAM/SMO estimates and logs energy consumption E(M2,O1, S1, N 1) (model deployment/update energy) for the execution of step 6.

Step 8: Node 1 stores the trained model with timestamps corresponding to time when model storage starts and time when model storage ends.

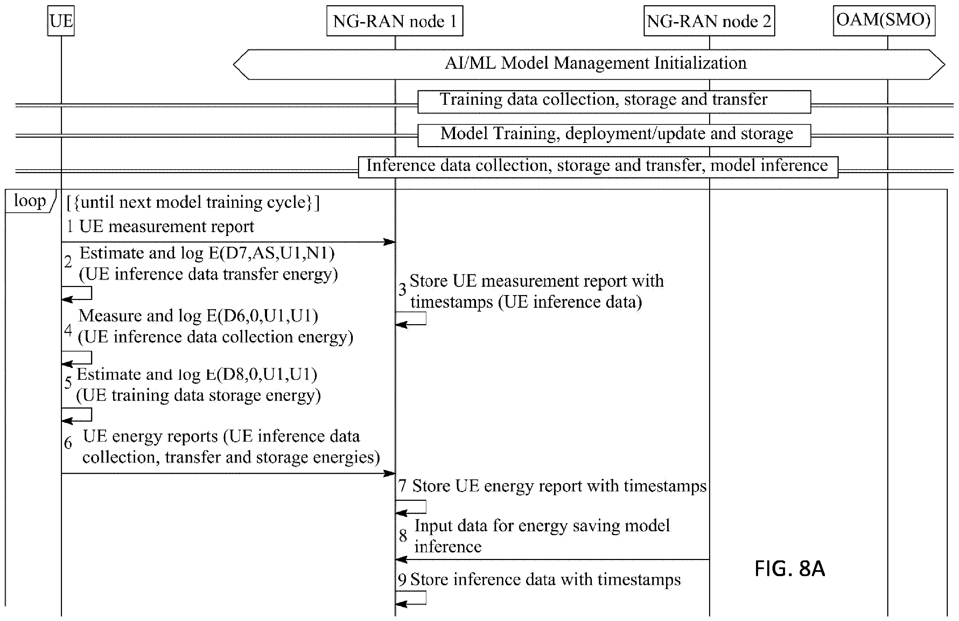

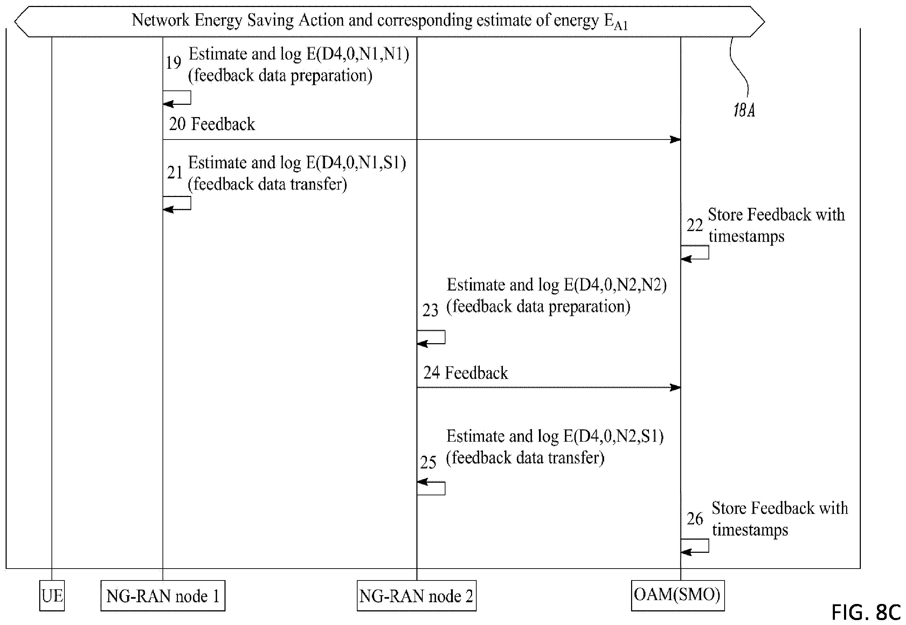

FIGS. 8A-8C shows a flowchart of a method performed during inference phase, e.g. for processing an inference request according to one or more example embodiments.

Steps 1 to 26 may be repeated iteratively in a loop for each inference request.

Step 1: UE transmits a new measurement report, including measurements (SINR, signal quality, etc.) that may be used as inference data.

Step 2: UE estimates and logs energy consumption E(D7,AS,U1,N1) (UE inference data transfer energy) for the execution of step 1.

Step 3: Node 1 stores the UE measurement report, including inference data, in association with timestamps.

Step 4: UE estimates and logs energy consumption E(D6,0,U1,U1) (inference input data collection energy) for the execution of step 1.

Step 5: UE estimates and logs energy consumption E(D8,0,U1,U1) for the storage of the measurements.

Step 6: UE transmits an energy consumption report to node 1 related to UE inference input data collection, transfer and storage energy based on the estimates obtained in steps 2, 4 and 5. A total energy consumption estimate (i.e. accumulated energy consumption estimate) may be sent or these estimates may be kept separated and merely aggregated in the energy consumption report.

Step 7: Node 1 stores the energy consumption report received from UE in step 6.

Step 8: Node 2 transmits input data for energy saving model inference to node 1.

Step 9: Node 1 stores the received input data in association with timestamps.

Step 10: Node 2 estimates and logs energy consumption E(D9,Xn,N2,N1) for the execution of step 8.

Step 11: Node 2 transmits an energy consumption report to node 1 related to node 2 inference data collection, transfer and storage based at least on the estimates obtained in step 10. The energy consumption report may include other energy consumption estimate generated by node 2. A total energy consumption estimate (i.e. accumulated energy consumption estimate) may be sent or these estimates may be kept separated and merely aggregated in the energy consumption report.

Step 12: Node 1 stores the energy consumption report received from UE in step 11.

Step 13: Node 1 carries out model inference data preparation.

Step 14: Node 1 estimates and logs energy consumption E(D10, 0, N1,N1) (inference data preparation energy) for the execution of step 13.

Step 15: Node 1 carries out model inference.

Step 16: Node 1 estimates and logs energy consumption E(M4,0,N1,N1) (model inference energy) for the execution of step 15.

Step 17: Node 1 transmits an energy consumption report to OAM/SMO related to node 1 inference data collection, preparation, transfer, storage and model inference based at least on the estimates obtained in step 14 and 16.

The energy consumption report may include other energy consumption estimate(s) generated by node 2. A total energy consumption estimate (i.e. accumulated energy consumption estimate) may be sent or these estimates may be kept separated and merely aggregated in the energy consumption report.

Step 18: OAM/SMO stores the energy consumption reports received from node 1 in step 17.

After step 18 and before step 19, a network energy saving action is performed in a phase 18A and a corresponding energy consumption E(A1,0, N1, N1) is generated corresponding to the action, for example by node 1 in this example.

Step 19: node 1 estimates and logs energy consumption E(D4,0,N1,N1) (feedback data preparation).

Step 20: node 1 transmits feedback to OAM/SMO.

Step 21: node 1 estimates and logs energy consumption E(D4,0,N1,S1) (feedback data transfer) for the execution of step 20.

Step 22: OAM/SMO stores the feedback from node 1 in association with timestamp associated with time of receiving the feedback.

Step 23: node 2 estimates and logs energy consumption E(D4,0,N2,N2) (feedback data preparation).

Step 24: node 2 transmits feedback to OAM/SMO.

Step 25: node 2 estimates and logs energy consumption E(D4,0,N2,S1) (feedback data transfer) for the execution of step 24.

Step 26: OAM/SMO stores the feedback from node 2 in association with timestamp associated with time of receiving the feedback.

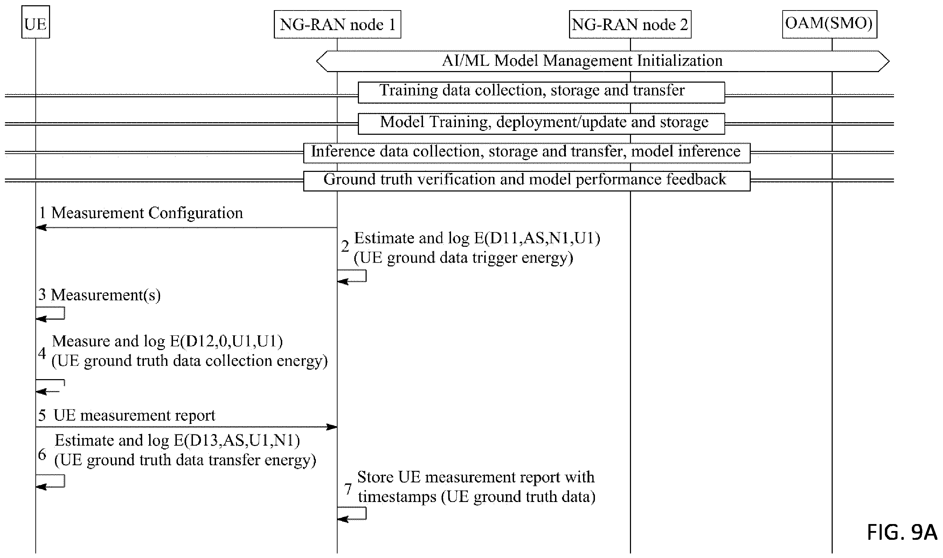

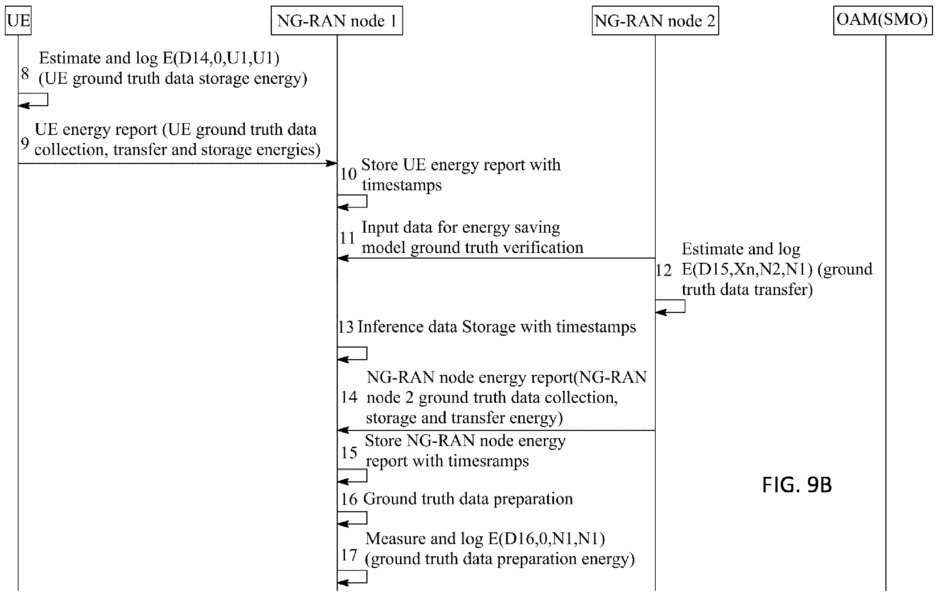

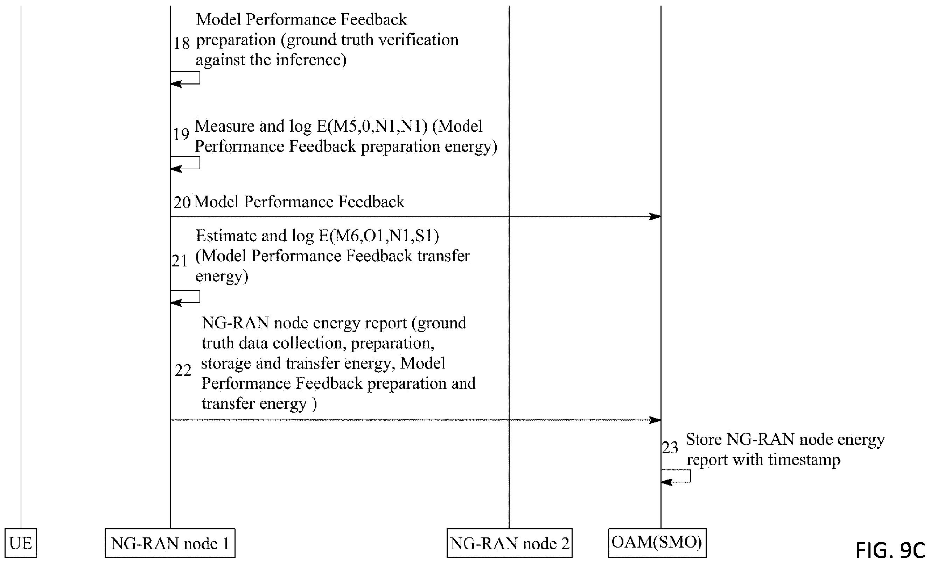

FIGS. 9A-9C shows a flowchart of a method for providing feedback after an inference phase according to one or more example embodiments.

Step 1: measurement configuration is sent by node 1 to UE. This measurement configuration may be RRC configuration signal. The measurements to be made may for example be based on reference signals.

The measurement configuration may contain measurement configuration for carrying out one or more measurements for determining at least one energy consumption estimate for at least one operation in a plurality of inter-related machine learning operations for network management.

The measurement configuration may include identifier of the operation(s) for which energy consumption estimate has to be determined. The measurement configuration may include units in which the measurements and/or the energy consumption estimate have to be generated.

Step 2: node 1 estimates and logs energy consumption E(D11, AS, N1, U1) (UE ground truth / feedback data trigger energy) for the execution of step 1.

Step 3: UE carries out the requested measurements.

Step 4: UE estimates and logs energy consumption E(D12,0,U1,U1) (UE ground truth / feedback data collection energy) for the execution of step 3.

Step 5: UE transmits measurement report to node 1. The measurement report may include measurements such as SINR, signal quality, etc, which may be used as feedback data or ground truth data.

Step 6: UE estimates and logs energy consumption E(D13,AS,U1,N1) (UE ground truth / feedback data transfer energy) for the execution of step 5.

Step 7: Node 1 stores the UE measurement report, including training data, in association with timestamps of measurements.

Step 8: UE estimates and logs energy consumption E(D14,0,U1,U1) (UE ground truth / feedback data storage energy).

Step 9: UE transmits an energy consumption report to node 1 related to UE ground truth / feedback data collection, transfer and storage energy based on the estimates obtained in steps 4, 5 and 8. A total energy consumption estimate (i.e. accumulated energy consumption estimate) may be sent as a single value or these estimates may be kept separated and merely aggregated in the energy consumption report.

Step 10: Node 1 stores the energy consumption report received from UE in step 9 in association with timestamps. The timestamps may be present in the energy consumption report or be generated by the recipient Node 1. The timestamps may be timestamps of generation of the estimate and/or timestamps of receipt of the energy consumption report.

Step 11: Node 2 transmits input data to node 1 for energy saving model ground truth / feedback verification.

Step 12: Node 2 estimates and logs energy consumption E(D15,Xn,N2,N1) (ground truth / feedback data transfer) for the execution of step 11.

Step 13: Node 1 stores inference data with associated timestamps.

Step 14: Node 2 transmits an energy consumption report to node 1 related to node 2 ground truth / feedback data collection, transfer and storage based on the estimates obtained in step 12. The energy consumption report may include other energy consumption estimates generated by node 2. A total energy consumption estimate (i.e. accumulated energy consumption estimate) may be sent or these estimates may be kept separated and merely aggregated in the sent energy consumption report.

Step 15: Node 1 stores the energy consumption report received from node 2 in step 14 in association with timestamps. The timestamps may be present in the energy consumption report or be generated by the recipient Node 1. The timestamps may be timestamps of generation of the estimate and/or timestamps of receipt of the energy consumption report.

Step 16: Node 1 carries out ground truth / feedback data preparation.

Step 17: Node 1 estimates and logs energy consumption E(D16,0,N1,N1) (ground truth / feedback data preparation energy) for the execution of step 16.

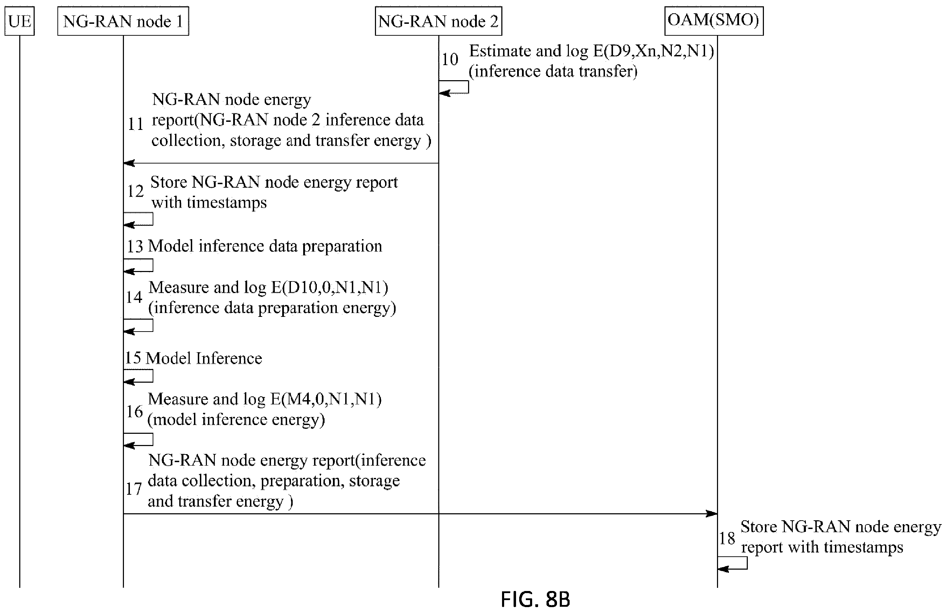

Step 18: Node 1 carries out model performance feedback preparation, e.g; by comparing the ground truth against the inference output of the ML model (see step 15, FIG. 8B)

Step 19: Node 1 estimates and logs energy consumption E(M5,0,N1,N1) (model performance feedback preparation energy) for the execution of step 18.

Step 20: Node 1 transmits model performance feedback to OAM/SMO.

Step 21: Node 1 estimates and logs energy consumption E(M6,O1,N1,S1) (model performance feedback transfer energy) for the execution of step 20.

Step 22: Node 1 transmits an energy consumption report to OAM/SMO related to node 1 ground truth data collection, preparation, storage and transfer based on the estimates obtained in steps 17, 19, 21. The energy consumption report may include other energy consumption estimates generated by node 2 and received with the energy consumption report in step 14. A total energy consumption estimate (i.e. accumulated energy consumption estimate) may be sent or these estimates may be kept separated and merely aggregated in the sent energy consumption report.

Step 23: OAM/SMO stores the energy consumption report received from UE in step 9 in association with timestamps. The timestamps may be present in the energy consumption report or be generated by the recipient Node 1. The timestamps may be timestamps of generation of the estimate and/or timestamps of receipt of the energy consumption report.

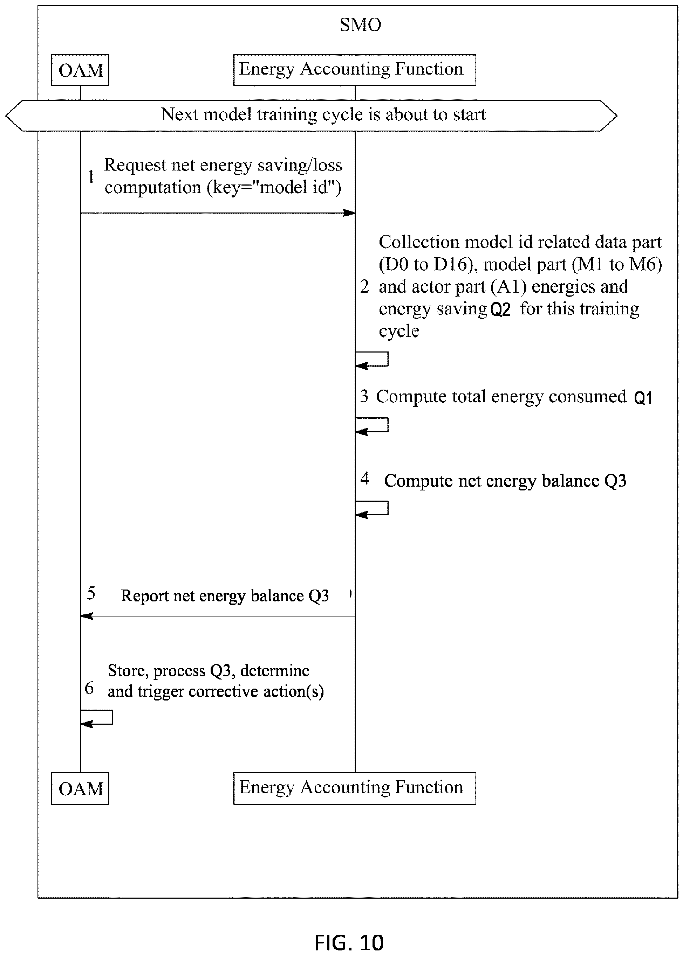

FIG. 10 shows a flowchart of a method for network management according to one or more example embodiments.

The steps of the method may be implemented by a network management entity (e.g., an OAM function) and an EAF function according to any example described herein. The method may be performed with collection of all energy consumption estimates before a next model training cycle is about to start. The energy consumption estimates are collected for a plurality of inter-related ML operations.

Step 1: OAM transmits a request for net energy balance computation to EAF. The request may include a model identifier of the ML model for network management for which the computation is requested.

Step 2: the EAF uses the energy consumption estimates (e.g. the received energy consumption reports) for all parts of the ML process executed on the basis of the ML model: data part (D0 to D6), model part (M1 to M6) and actor part (A1): these estimates may be used to compute quantity Q1. The Node 1 may receive an estimate of the energy saved at Node 1 (Actor) for all energy saving actions carried out by the Actor during the net energy balance monitoring period: this estimate may be transmitted from the Actor to a network management entity (OAM/SMO) and be used to compute quantity Q2.

Step 3: the EAF computes the total energy consumed by adding all the energy consumption estimates for all parts of the ML process to determine quantities Q1a, and Q1b. This may be performed according to any example disclosed herein.

Step 4: the EAF computes net energy balance Q3 based on Q1 and Q2, e.g., by subtracting quantity Q1 (i.e., the sum of quantities Q1a and Q1b) from quantity Q2 according to any embodiment disclosed herein.

Step 5: the EAF responds to the request by reporting the net energy balance Q3 to the OAM.

Step 6: the OAM stores the quantity Q3 and determines whether a corrective action (e.g. a network orchestration and / or network management action) for controlling energy consumption should be carried out based on the sign and/or value of quantity Q3. When the quantity Q3 is positive no corrective action may be necessary.

The corrective action may be carried out based on at least one network management related configuration (e.g. one or more network management parameters) for carrying out at least one of inter-related Machine Learning operations. The corrective action may be determined on the basis of the energy consumption estimates obtained for the inter-related Machine Learning operations.

The determination of the corrective action(s) and/or the at least one network management related configuration (e.g. one or more network management parameters) may be performed by a network management entity (e.g., the OAM/SMO) or by another entity (e.g. a UE, a RAN node, another network node).

The corrective action(s) and/or the associated at least one network management related configuration (e.g. one or more network management parameters) may be transmitted to any entity (e.g. a UE, a RAN node, another network node) that has to carry out and/or trigger at least one of the corrective action(s) or is involved in at least one of the corrective action(s).

The corrective action may be a network orchestration and / or network management action. A network management action may be for example a resource deployment action, a monitoring action, a network orchestration action, a resource management action, a network function deactivation action, a root cause analysis action, a configuration action, a channel estimation, an optimization action, a repair action, a maintenance action, a restart of a device, a reboot of a device, a software update, a signaling operation, etc.

The corrective action(s) and/or associated network management related configuration (e.g. one or more network management parameters) may be determined on the basis of on the net energy balance Q3 between (i) the accumulated energy consumption estimated for executing one or more of the plurality of inter-related ML operations and (ii) energy saved by at least one action performed based on at least one output (e.g. a network energy saving decision) of at least one of the inter-related ML operations (e.g. the model inference and transmission of the output to the Actor).

The corrective action(s) may be executed by one or several entities (e.g. UE and/or RAN node and/or any other network node) that are involved in at least one of the inter-related Machine Learning operations and/or that carry out operation(s) in the inter-related Machine Learning operations.

The corrective actions may be carried out according to at least one network management related configuration (e.g. one or more network management parameters) for carrying out the inter-related Machine Learning operations.

The at least one network management related configuration (e.g. one or more network management parameters) may include a timing and/or a location in association with carrying out the at least one operation in a plurality of inter-related machine learning operations for network management..

The at least one network management related configuration (e.g. one or more network management parameters) may include one of: a parameter of the Machine Learning model to be updated, an instruction to trigger retraining of the Machine Learning model, an instruction to trigger inference of the Machine Learning model, an instruction to trigger training data collection for the Machine Learning model, an instruction to trigger inference data collection for the Machine Learning model, an instruction to replace the Machine Learning based model by another Machine Learning based model, an instruction to stop execution of one or more of the plurality of inter-related Machine Learning operations, etc.

The corrective action(s) and/or the associated network management related configuration (e.g. one or more network management parameters) may be determined on the basis of an analysis of the collected energy consumption estimates, e.g. after identification of which operation in the inter-related ML operations and/o which devices of the network contribute most (positively and/or negatively) to the net energy balance.

For example, if it is determined, based on the quantity Q3, that the ML network energy saving framework is operating with "net energy loss" (net energy balance is negative), as a next step the network management entity (e.g., the OAM) identifies which parts of the network significantly contribute most (positively and/or negatively) to the net energy loss. Based on this identification, the network management entity may decide upon and carries out corrective action(s) (e.g. management and / or orchestration actions) targeting the network entities contributing to the network energy loss.

Per one of many examples of corrective actions, the ML model may be decommissioned / deactivated after a given number of consecutive net energy loss evaluations. In another example, the ML model may be relocated to another network entity. In an additional example, different data sources (e.g., UEs) may be configured to provide model training data.

The corrective action may be an update of one or more parameters of one of the inter-related ML operations, for example a parameters of the ML model. The corrective action may be to trigger one of the inter-related Machine Learning operations, for example to trigger data collection (for training and/or inference) and/or model training and/or model inference and/or feedback data generation. The corrective action may be to deactivate the ML model and/or at least one of the inter-related ML operations.

The corrective action(s) may include for example: a network management function, a network monitoring function, a network configuration function, an update of the ML model, a replacement of the current ML model by another ML model, a training of the current ML model, relocation of training and/or inference to another computing node, ML model meta data turning, an early stopping of ML model training, ML model training devising power acceleration, carrying out ML model platform power capping an updated configuration of different data sources, for example, closer to the Actor network node, etc. For example, the AI/ML model owner (or operator/ lifecycle manager) may investigate the issue and enhance the model (e.g., via re-training devising e.g., power acceleration and/or early stopping of training and/or model platform power capping and/or train model based on less data of higher quality etc.).

The corrective action(s) may be triggered by the OAM, the SMO or any other network entity. The corrective action(s) may be determined according to a predefined network management policy.

The computation of the quantity Q3 may be performed as follows.

To measure total energy Q1a consumed in the entire ML process as defined herein three contributors are considered: (i) model, (ii) data and (iii) Actor.

Below equations clarify upon energy components relevant to the model, data and actor parts, in order to calculate quantity Q1a.

Let EM be the total energy consumed by the model part:

$$EM = \sum_{\forall\ applicable\ i,j,k,l} E(Mi,j,k,l)$$

Let ED be the total energy consumed by the data part:

$$ED = \sum_{\forall\ applicable\ i,j,k,l} E(Di,j,k,l)$$

Let EA be the total energy consumed by the actor part:

$$EA = \sum_{\forall\ applicable\ i,j,k,l} E(Ai,j,k,l)$$

Then the quantity Q1a may be computed as

$$Q1a = EM + ED + EA$$

To measure or estimate energy quantity E(Mi,j,k,l), E(Di,j,k,l) or E(Ai,j,k,l), multiple methods may be used. One such method may be to use table look up. Table with related energy quantity values may be created in multiple ways e.g., based on testing results, based on field observations and so on. Various performance parameters such as battery level, CPU / GPU time for performing operations, transmission rate for data transfers, etc., may be analyzed and used to determine an energy consumption estimate.

To measure or estimate energy quantity a method may be to compare pre-operation energy level Qpre and post-operation energy level Qpost, such that the difference Qpre-Qpost is the energy consumed during the operation.

To determine the quantity Q1b, i.e., any increase in energy consumption elsewhere in the network, for all the nodes other than the actor node affected by the execution of an action taken by the Actor, for given environment conditions (e.g., network conditions, traffic etc.), pre-action energy level Q1b_pre and post-action energy level Q1b_post may be compared, such that the difference Q1b_post-Q1b_pre is the energy consumed by the execution of the action. It is to be noted that the energy consumed by the Actor node for the execution of an action taken by the Actor is taken into account in Q1a by the EAF, i.e. the total energy consumed by the actor node by the actor part.

To determine the quantity Q2, total network energy saved by network energy saving decision(s) made through AI/ML model inference and applied to the network, for given environment conditions (e.g., network conditions, traffic etc.), pre-decision energy level Q2_pre and post-decision energy level Q2_post may be compared, such that the difference Q2_pre-Q2_post is the energy saved by the decision.

The quantity Q3 may then be computed as Q3 = Q2 - Q1.

Every energy consumption report may include a model identifier to uniquely identify the ML model it is associated with. With the model identifier, the following information may be joined: (model/data/action related) operation identifier, interface identifier, source node identifier and target node identifier. For that purpose, each network node involved in an ML use case may be distinctly identified and accounted for. This allows flexibility to compute energy consumed at any level: at entire model level, at use case level i.e. for a complete use case which may employ one or more ML models, at node level, at system level, at interface level, data/model/actor part level for a model, and so on. For further granularity, protocol identifiers for the protocols within the protocol stack implementing an interface may be added as well.

If more than one model uses the same set of data, energies related to data part are equally amortized over those models during the accounting for a given net energy balance monitoring period.

If inference level accounting is needed (most granular), model training energies may be amortized over number of inferences that were made during the training cycle and up to the next model training/ fine-tuning event.

Whenever data, model and training energies are accounted for, they may be reset to avoid double counting: e.g., since ground truth data may be used for both ground truth verification and subsequent training, related energies are reset on ground truth verification and only storage energies of the data are accounted for in next training cycle. Another example is inference data.

An energy consumption reporting protocol may be implemented that defines the format and parameters of energy consumption reports as disclosed herein.

An energy consumption reporting protocol may be enhanced with proper metadata and parameters, e.g. timestamp(s), operation identifier, communication interface identifier, device identifier(s) (or entity identifier(s)), model identifier.

In embodiments, one or more information element(s) (IE(s)) sent by a NG-RAN node to another NG-RAN node may be used in one or more existing messages or one or more new messages for reporting energy consumption estimates.

As an example, the protocol defined in 3GPP TS38.423 for "Data Collection Reporting" may involve the following messages:

- DATA COLLECTION REQUEST, sent from an NG-RAN node ("node 1") to another NG-RAN node ("node 2") requesting the start/stop of AI/ML related information reporting;
- DATA COLLECTION RESPONSE, sent from node 2 to node 1 indicating it is capable to provide all of the requested AI/ML information;
- DATA COLLECTION UPDATE, sent from node 2 to node 1 with the requested information (predictions and/or measurements);
- DATA COLLECTION FAILURE, sent from node 2 to node 1 to indicate that for all of (exact details of if and how to support partial reporting are FFS) the requested objects the reporting cannot be initiated.

As an example, the table 1 defines the IEs of the DATA COLLECTION UPDATE message. This message is intended to be sent by NG-RAN node 2 to NG-RAN node 1 to report the requested AI/ML related information.

This message may be used to report the below information elements (in the table 1 these IE are encoded as sub-elements under the IE "Energy Cost"):

i) a IE representing the increase and/or decrease in network energy consumption at NG-RAN node 2 associated to the ML energy saving action taken by the Actor (i.e., NG-RAN node 1), this sub-element being denoted in the table 1 as "Energy Consumption Increase";

ii) a IE representing the energy consumed by NG-RAN node 2 relating to the transfer of training data to NG-RAN node 1 (energy quantity denoted herein as E(D4,Xn,2,1)), this sub-element being denoted in the table 1 as "Training Data Transfer Energy Consumption";

iii) a IE representing the energy consumed by NG-RAN node 2 relating to the transfer of inference data to NG-RAN node 1 (energy quantity denoted as E(D9,Xn,2,1)), this sub-element being denoted in the table 1 as "Inference Data Transfer Energy Consumption";

iv) a IE representing the energy consumed by NG-RAN node 2 relating to the transfer of ground truth data to NG-RAN node 1 (energy quantity denoted as E(D15,Xn,2,1)), this sub-element being denoted in the table 1 as "Ground Truth Data Transfer Energy Consumption".

Table 1

| IE/Group Name | Presence | Range | IE type and reference | Semantics description |
|---|---|---|---|---|
| Message Type | M | | 9.2.3.1 | |
| NG-RAN node 1 Measurement ID | M | | INTEGER (1..4095,.. .) | Allocated by NG-RAN node 1 |
| NG-RAN node 2 Measurement ID | M | | INTEGER (1..4095,.. .) | Allocated by NG-RAN node 2 |
| **Cell AI/ML Info Result** | | *0..1* | | |
| **>Cell AI/ML Info Result Item** | | *1 .. < max-noof Cell-sinN G-RANnod e >* | | |
| >>Cell ID | M | | Global NG-RAN Cell Identity 9.2.2.27 | |
| >>Predicted Radio Resource Status | O | | 9.2.2.50 | |

(continued)

| IE/Group Name | Presence | Range | IE type and reference | Semantics description |
|---|---|---|---|---|
| >>Predicted Number of Active UEs | O | | 9.2.2.62 | |
| >>Predicted RRC Connections | O | | 9.2.2.56 | |
| **UE Associated Info Result** | | *0..1* | | |
| **> UE Associated Info Result Item** | | *1 .. < max-noof UEReports >* | | |
| » UE Assistant Identifier | M | | NG-RAN node UE XnAP ID 9.2.3.16 | NG-RAN node UE XnAP ID allocated by NG-RAN node 1 |
| >>UE Performance | O | | 9.2.3.Y | |
| >>UE trajectory | O | | | |
| **Energy Cost** | O | | any | It represents the energy consumption at NG-RAN node 2 associated to different energy consumption events relating to AI/ML NG-RAN node 1 network energy saving actions |
| *>Energy Consumption Increase/ Decrease* | M | *0..1000* | any | Increase in network energy consumption at NG-RAN node 2 associated to the ML energy saving action taken by NG-RAN node 1 |
| *> Training Data Transfer Energy Consumption* | M | *0..1000* | any | Energy consumed by node 2 relating to the transfer of training data to node 1 |
| *> Inference Data Transfer Energy Consumption* | M | *0..1000* | any | Energy consumed by node 2 relating to the transfer of inference data to node 1 |
| *> Ground Truth Data Transfer Energy Consumption* | M | *0..1000* | any | Energy consumed by node 2 relating to the transfer of ground truth data to node 1 |

In embodiments, a NG-RAN node energy report message may be used to report energy consumption estimates. This message is intended to be sent from one NG-RAN node to another NG-RAN node over Xn interface to report NG-RAN node energy measurements (i.e., energy consumption estimates associated to data collection and storage). Alternatively, these energy consumption estimates may be included as sub-elements of the Energy Cost IE of the "DATA COLLECTION UPDATE" message defined in table 1.

In embodiments, a UE Energy Report message may be used for an energy consumption report. This message may be a RRC message intended to be sent from UE to NG-RAN node over AS interface to report UE energy consumption estimates. Alternatively, new IE related to UE energy consumption estimates may be added in the RRC UE Measurement Report message defined in TS38.331.

In embodiments, a new class of energy consumption estimates, denoted "AI/ML energy consumption estimates" may be used and may include all the energy consumption estimates related to model, data and actor as discussed herein. This new class of energy consumption estimates may be introduced in 3GPP SA5 TS 28.552.

In embodiments, a new KPI may be used to account for net energy balance. This KPI may be added to those defined in 3GPP SA5 TS 28.554.

In embodiments, a new message "NG-RAN node energy report" may be added (e.g. in WG10 O1 interface, as defined in O-RAN) to report NG-RAN i.e. E2 node energy consumption estimates to SMO over O1 interface.

In embodiments, a new R1 API may be added (e.g. in WG2 R1 API specification) for OAM to trigger EAF to compute net energy balance using R1 API. In embodiments, a new R1 API may be added (e.g. in WG2 R1 API specification) for EAF to report OAM with net energy balance using R1 API. This new R1 API is used to request net energy balance and report net energy balance.

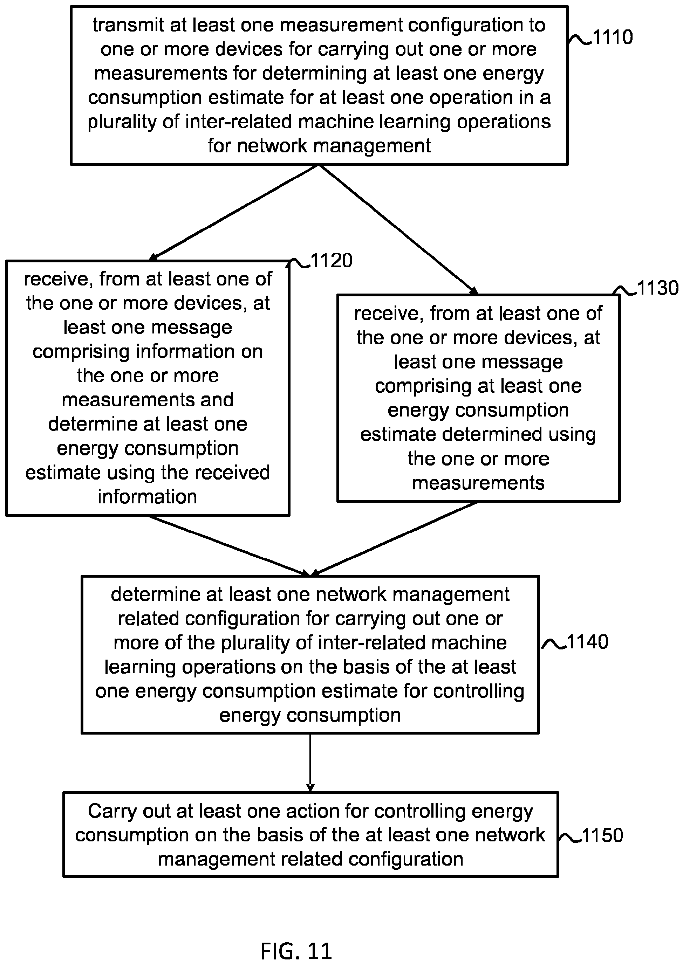

FIG. 11 shows a flowchart of a method according to one or more example embodiments. The steps of the method may be implemented by a network node (e.g. SMO, RAN node, etc) according to any example described herein.

While the steps are described in a sequential manner, the person skilled in the art will appreciate that some steps may be omitted, combined, performed in different order and / or in parallel.

Step 1110: the network node may transmit at least one measurement configuration to one or more devices for carrying out one or more measurements for determining at least one energy consumption estimate for at least one operation in a plurality of inter-related machine learning operations for network management.

The plurality of inter-related machine learning operations may comprise: (i) one or more operations for collecting data, (ii) one or more data transfer operations to transmit the collected data to the network node, and (iii) one or more data storage operations to store the collected data and (iv) one or more data processing operations to process the collected data.

Operations for collecting data may include for example operations D0, D1, D6, D11, D12 as disclosed by reference to FIG. 2. Data transfer operations may include for example operations D2, D6, D13, D15, D9 as disclosed by reference to FIG. 2. Data storage operations may include for example operations D3, D4, D8, D14 as disclosed by reference to FIG. 2. Data processing operations may include for example operations M1, M4, D5, D10, D16 as disclosed by reference to FIG. 2.

The measurement configuration may include identifier of the operation(s) for which energy consumption estimate has to be determined. The measurement configuration may include units in which the measurements and/or the energy consumption estimate have to be generated.

After step 1110, the network node may carry out step 1120 or step 1130.

Step 1120: the network node may receive, from at least one of the one or more devices, at least one message comprising information on the one or more measurements and determine at least one energy consumption estimate using the received information. Step 1140 may be carried out after step 1120.

Step 1130: the network node may receive, from at least one of the one or more devices, at least one message comprising at least one energy consumption estimate determined using the one or more measurements. Step 1140 may be carried out after step 1130.

Optionally, the network node may control validity of the at least one energy consumption estimate by using an associated timestamp.

The message received in step 1120 or 1130 may comprise on of: at least one identifier of the at least one operation and a timestamp for an energy consumption estimate.

The message received in step 1120 or 1130 may comprise an energy consumption estimate or measurements for a data transfer operation to transfer the measurement data to network node and an identifier of a communication interface used to carry out the data transfer operation. The message may comprise an identifier of the at least one of the one or more first devices and an identifier of the network node.

The message received in step 1120 or 1130 may be a DATA COLLECTION UPDATE message or a RRC message (e.g. an enhanced RRC message).

Optionally, the network node may estimate and log energy consumed for carrying out at least one second operation in the plurality of inter-related ML operations to generate at least one second energy consumption estimate, wherein the plurality of inter-related ML operations further comprises (i) at least one model inference data preparation operation, and (ii) at least one execution operation of ML based model;

Optionally, the network node may estimate and log energy consumed for carrying out at least one third operation in the plurality of inter-related ML operations to generate at least one third energy consumption estimate, wherein the plurality of inter-related ML operations further comprises (i) at least one data feedback generation operation for generating feedback data, (ii) at least one data transfer operation to transfer feedback data to a network node and (iii) at least one data storage operation for storing feedback data.

In step 1140: the network node may obtain or determine at least one network management related configuration (e.g. one or more network management parameters) for carrying out one or more of the plurality of inter-related machine learning operations on the basis of the at least one energy consumption estimate for controlling energy consumption.

The at least one network management related configuration may be obtained and/or determined on the basis of the at least one second and / or third energy consumption estimate(s).

The network node may obtain and/or determine at least one network management related configuration by transmitting the at least one first energy consumption estimate to a network management entity and by receiving the at least one network management related configuration from the network management entity.

In step 1140, the network node may further transmit, to the one or more devices, the at least one network management related configuration, or carry out the one or more of the plurality of inter-related machine learning operations.

The at least one network management related configuration may be determined on the basis of on a net energy balance between (i) an accumulated energy consumption estimated for executing one or more of the plurality of inter-related machine learning operations and (ii) energy saved by at least one action carried out based on at least one output of at least one of the inter-related machine learning operations, wherein the accumulated energy consumption is based on the at least one energy consumption estimate.

The at least one network management related configuration may comprise timing and/or a location in association with carrying out the at least one operation in a plurality of inter-related machine learning operations for network management.

In examples, the plurality of inter-related machine learning operations are part of a machine learning process based on at least one machine learning model for network management. The at least one network management related configuration may comprise at least one of: one or more parameters of the machine learning model to be updated, an instruction to trigger retraining of the machine learning model, an instruction to trigger inference of the machine learning model, an instruction to trigger training data collection for the machine learning model, an instruction to trigger inference data collection for the machine learning model, an instruction to replace the machine learning based model by another machine learning based model, and an instruction to stop execution of one or more of the plurality of inter-related machine learning operations.

In step 1150: the network node may carry out at least one action for controlling energy consumption on the basis of the at least one network management related configuration.

The at least one action may be a corrective action for controlling energy consumption and may be any of the example corrective corrections disclosed herein.

The action(s) for controlling energy consumption may be determined by a network management entity (e.g., OAM and/or SMO) and the network node may carry out (or, be impacted by) at least one corrective action as decided by the network management entity.

The at least one action for controlling energy consumption may be one of a network management action, an ML model orchestration action and/or ML model management action.

The at least one action for controlling energy consumption may comprise at least one of: an update at least one parameter of at least one of the plurality of inter-related Machine Learning operations; a trigger at least one of the plurality of inter-related Machine Learning operations; a deactivation of at least one of the plurality of inter-related Machine Learning operations.

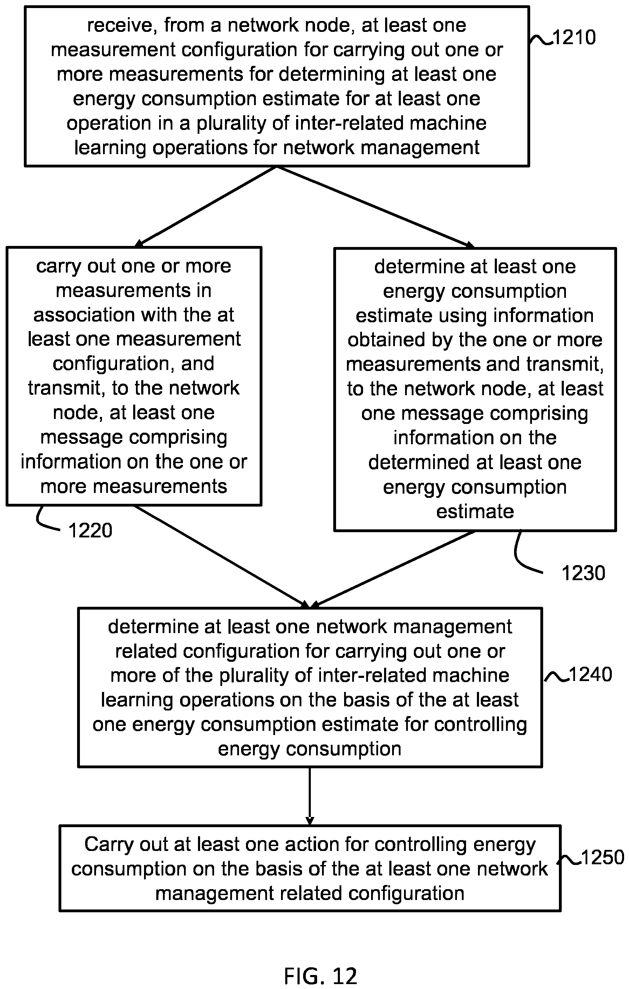

FIG. 12 shows a flowchart of a method according to one or more example embodiments. The steps of the method may be implemented for example by a User Equipment according to any example described herein.

While the steps are described in a sequential manner, the person skilled in the art will appreciate that some steps may be omitted, combined, performed in different order and / or in parallel.

In step 1210: the UE may receive, from a network node, at least one measurement configuration for carrying out one or more measurements for determining at least one energy consumption estimate for at least one operation in a plurality of inter-related machine learning operations for network management.

The plurality of inter-related machine learning operations may comprise (i) one or more operations for collecting data, (ii) one or more data transfer operations to transmit the collected data to the network node, and (iii) one or more data storage operations to store the collected data and (iv) one or more data processing operations to process the collected data.

Operations for collecting data may include for example operations D0, D1, D6, D11, D12 as disclosed by reference to FIG. 2. Data transfer operations may include for example operations D2, D6, D13, D15, D9 as disclosed by reference to FIG. 2. Data storage operations may include for example operations D3, D4, D8, D14 as disclosed by reference to FIG. 2. Data processing operations may include for example operations M1, M4, D5, D10, D16 as disclosed by reference to FIG. 2.

The measurement configuration may include identifier of the operation(s) for which energy consumption estimate has to be determined. The measurement configuration may include units in which the measurements and/or the energy consumption estimate have to be generated.

Step 1220 or 1230 may be carried out after step 1210.

In step 1220: the UE may carry out one or more measurements in association with the at least one measurement configuration, and transmit, to the network node, at least one message comprising information on the one or more measurements. Step 1240 may be carried out after step 1220.

In step 1230: the UE may determine at least one energy consumption estimate using information obtained by the one or more measurements and transmit, to the network node, at least one message comprising information on the determined at least one energy consumption estimate. Step 1240 may be carried out after step 1230.

Optionally, the user equipment may control validity of the at least one energy consumption estimate by using an associated timestamp.

The message transmitted in step 1220 or 1230 may comprise one of: at least one identifier of the at least one operation and a timestamp for an energy consumption estimate.

The message transmitted in step 1220 or 1230 may comprise an energy consumption estimate or measurements for a data transfer operation to transfer the measurement data to network node and an identifier of a communication interface used to carry out the data transfer operation. The message may comprise an identifier of the at least one of the one or more first devices and an identifier of the network node.

The message transmitted in step 1220 or 1230 may be a DATA COLLECTION UPDATE message or a RRC message (e.g. an enhanced RRC message).

In step 1240: the UE may obtain or determine or receive (e.g. from the network management entity or another network node) at least one network management related configuration (e.g. one or more network management parameters) for carrying out one or more of the plurality of inter-related machine learning operations on the basis of the at least one energy consumption estimate for controlling energy consumption.

The at least one network management related configuration may be determined on the basis of on a net energy balance between (i) an accumulated energy consumption estimated for executing one or more of the plurality of inter-related machine learning operations and (ii) energy saved by at least one action carried out based on at least one output of at least one of the inter-related machine learning operations, wherein the accumulated energy consumption is based on the at least one energy consumption estimate.

The at least one network management related configuration may comprise timing and/or a location in association with carrying out the at least one operation in a plurality of inter-related machine learning operations for network management.

In examples, the plurality of inter-related machine learning operations are part of a machine learning process based on at least one machine learning model for network management. The at least one network management related configuration may comprise at least one of: one or more parameters of the machine learning model to be updated, an instruction to trigger retraining of the machine learning model, an instruction to trigger inference of the machine learning model, an instruction to trigger training data collection for the machine learning model, an instruction to trigger inference data collection for the machine learning model, an instruction to replace the machine learning based model by another machine learning based model, and an instruction to stop execution of one or more of the plurality of inter-related machine learning operations.

In step 1250: the UE may carry out at least one action for controlling energy consumption on the basis of the at least one network management related configuration.

The at least one action may be a corrective action for controlling energy consumption and may be any of the example corrective corrections disclosed herein.

The action(s) for controlling energy consumption may be determined by a network management entity (e.g., OAM and/or SMO) and the network node may carry out (or, be impacted by) at least one corrective action as decided by the network management entity.

The at least one action for controlling energy consumption may be one of a network management action, an ML model orchestration action and/or ML model management action.

The at least one action for controlling energy consumption may comprise at least one of: an update at least one parameter of at least one of the plurality of inter-related Machine Learning operations; a trigger at least one of the plurality of inter-related Machine Learning operations; a deactivation of at least one of the plurality of inter-related Machine Learning operations.

Various example examples relate generally to apparatus and/or network nodes for estimating a net energy balance for a plurality of inter-related ML operations for triggering one or more network management actions (for example, network energy saving actions). The network management actions may be carried out by an actor network entity based on the output of an ML model configured to generate or predict network management actions (for example, network energy saving predictions and/or decisions).

Besides the energy saved owing to the network energy saving actions carried out by the actor network entity, the net energy balance accounts for the energy consumed across the inter-related ML operations.

In some examples, the possible increase of energy consumption of network nodes in the vicinity of the actor network entity may also be taken into account.

A network node, after being signaled the net energy balance may trigger a corrective action (for example, a network orchestration action and/or ML model orchestration action and/or ML model management action and/or network management action) to sustain or increase a positive net energy balance or turn a negative net energy balance to a positive one. This corrective action may be based on at least one network management related configuration for carrying out the plurality of inter-related ML operations. At least one network management related configuration (e.g. one or more network management parameters) may be estimated on the basis the energy consumption estimates for one or more of the plurality of inter-related ML operations.

A RAN node may be any type of base station (eNB, gNB, gNB-DU, gNB-CU, etc). At least part of the functionalities of the RAN node may also be carried out by a network entity (like a server) which is operably coupled to a transceiver (such as a remote radio head for example). The network entity may include other functions (such as an OAM function or another network function such as NWDAF, Network Data Analytics Function, etc).

A base station may be a computing device configured to control the radio resources of communication system it is coupled to. The base station may also be referred to as an access point or any other type of interfacing device including a relay station capable of operating in a wireless environment. The base station may include or be coupled to transceivers. From the transceivers of the base station, a connection may be provided to an antenna unit that establishes bi-directional radio links to user devices. The antenna unit may comprise a plurality of antennas or antenna elements. The base station may further be connected to core network, CN. Depending on the system, the counterpart on the CN side may be a serving gateway (S-GW, routing and forwarding user data packets), packet data network gateway (P-GW), for providing connectivity of user devices (UEs) to external packet data networks, or mobile management entity (MME), etc.

A user equipment, UE, (or user terminal, user device, terminal device) may refer to a computing device that includes wireless mobile communication devices operating with or without a subscriber identification module (SIM), including, but not limited to, the following types of devices: a mobile station (MS), a mobile phone, a radio cell phone, a smartphone, a personal digital assistant (PDA), a handset, a device using a wireless modem (alarm or measurement device, etc.), a laptop and/or touch screen computer, a tablet, a phablet, a game console, a notebook, and a multimedia device, as examples.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe a set of steps as a sequential process, many of the steps may be performed in parallel, concurrently or simultaneously. Also some steps may be omitted, combined or performed in different order. A process may be terminated when its steps are completed but may also have additional steps not disclosed in the figure or description.

Each described process, function, engine, block, step described herein can be implemented in hardware, software, firmware, middleware, microcode, or any suitable combination thereof.

When implemented in software, firmware, middleware or microcode, instructions to carry out the necessary tasks may be stored in a computer readable medium that may be or not included in a host device or host system configured to execute the instructions. The instructions may be sent over the computer-readable medium and be loaded onto the host device or host system. The instructions are configured to cause the host device or host system to carry out one or more functions disclosed herein. For example, as mentioned above, at least one memory may include or store instructions, the at least one memory and the instructions may be configured to, with at least one processor, cause the host device or host system to carry out the one or more functions.

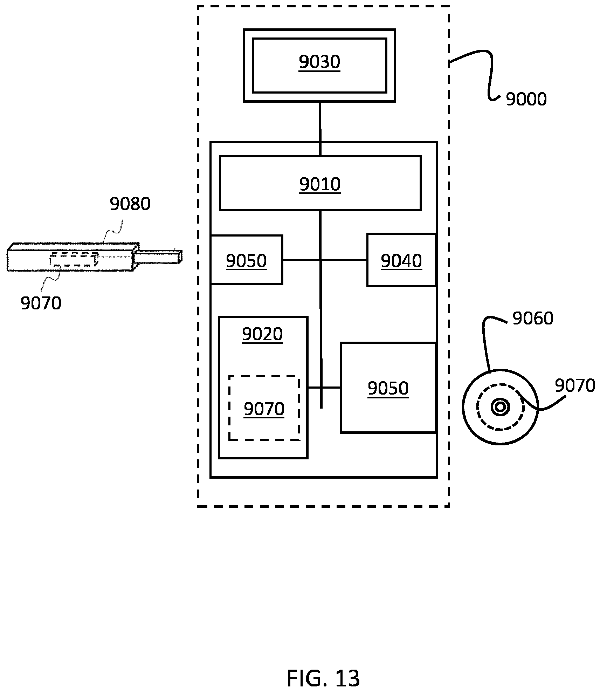

FIG. 13 illustrates an example embodiment of an apparatus 9000, as example host device. The apparatus 9000 may be configured to carry out one or more functions of a network node disclosed herein. The apparatus 9000 may be configured to carry out one or more or all steps of any method disclosed herein.

The apparatus may be a general-purpose computer, a special purpose computer, a programmable processing apparatus, a machine, etc. The apparatus may be or include or be part of: a user equipment, client device, mobile phone, laptop, computer, network element, data server, network resource controller, network apparatus, router, gateway, network node, computer, cloud-based server, web server, application server, proxy server, etc.

As represented schematically, the apparatus 9000 may include at least one processor 9010 and at least one memory 9020. The apparatus 9000 may include one or more communication interfaces 9040 (e.g. network interfaces for access to a wired / wireless network, including Ethernet interface, WIFI interface, etc) connected to the processor and configured to communicate via wired / non wired communication link(s). The apparatus 9000 may include user interfaces 9030 (e.g. keyboard, mouse, display screen, etc) connected with the processor. The apparatus 9000 may further include one or more media drives 9050 for reading a computer-readable storage medium (e.g. digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may be or include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to carry out one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or sent via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to carry out one or more functions" or "means for carrying out one or more functions" may correspond to one or more functional blocks comprising circuitry that is adapted for carrying out or configured to carry out the concerned function(s). The block may carry out itself this function or may cooperate and / or communicate with other one or more blocks to carry out this function. The "means" may correspond to or be implemented as "one or more modules", "one or more devices", "one or more units", etc.

The means may include at least one processor and at least one memory including at least one memory storing instructions that, when executed by the at least one processor, cause the apparatus to the considered function(s). The means may include circuitry (e.g. processing circuitry) configured to carry out the considered function(s).

As used in this application, the term "circuitry" may refer to one or more or all of the following:

(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to carry out various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network entity.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed devices, systems and methods without departing from the scope of what is disclosed. Such embodiments should be understood to fall within the scope of the present disclosure as determined based upon the claims and any equivalents thereof.

LIST OF CITED REFERENCE

[01] 3GPP document TR 37.817 entitled "Study on enhancement for Data Collection for NR and EN-DC (Release 17)", V17.0.0, 2022-04

LIST OF MAIN ABBREVIATIONS

| | |
|---|---|
| 3GPP | 3rd Generation Partnership Project |
| AI/ML | Artificial Intelligence/Machine Learning |
| CN | Core Network |
| CU | Central Unit |
| DTX | Discontinuous Transmission |
| DU | Distributed Unit |
| EAF | Energy Accounting Function |
| EE | Environmental Engineering |
| ETSI | European Telecommunications Standards Institute |
| FFS | For Further Study |
| gNB | 5G Node B |
| GPU | Graphics Processing Unit |
| ID | Identifier |
| IE | Information Element |
| KPI | Key Performance Indicator |
| MDT | Minimization of Driving Tests |
| NF | Network Function |
| NG-RAN | New Generation - Radio Access Network |
| NIC | Network Interface Card |
| NR | New Radio |
| NW | Network |
| NWDAF | Network Data Analytics Function |
| OAM | Operation and Maintenance |
| RAN | Radio Access Network |
| RLF | Radio Link Failure |

RRM  Radio Resource Management
SMO  Service Management and Orchestration
TL   Transfer Learning

**Claims**

1. A network node comprising means for

transmitting at least one measurement configuration to one or more devices for carrying out one or more measurements for determining at least one energy consumption estimate for at least one operation in a plurality of inter-related machine learning operations for network management, wherein the plurality of inter-related machine learning operations comprises (i) one or more operations for collecting data, (ii) one or more data transfer operations to transmit the collected data to the network node, and (iii) one or more data storage operations to store the collected data and (iv) one or more data processing operations to process the collected data;
receiving, from at least one of the one or more devices, at least one message comprising information on the one or more measurements and determine at least one energy consumption estimate using the received information, or
receiving, from at least one of the one or more devices, at least one message comprising at least one energy consumption estimate determined using the one or more measurements;
and
determining at least one network management related configuration for carrying out one or more of the plurality of inter-related machine learning operations on the basis of the at least one energy consumption estimate for controlling energy consumption.

2. The network node of claim 1, further comprising means for:

transmitting, to the one or more devices, the at least one network management related configuration, or
carrying out the one or more of the plurality of inter-related machine learning operations.

3. The network node of claim 1 or 2, wherein the at least one network management related configuration is determined on the basis of on a net energy balance between (i) an accumulated energy consumption estimated for executing one or more of the plurality of inter-related machine learning operations and (ii) energy saved by at least one action carried out based on at least one output of at least one of the inter-related machine learning operations, wherein the accumulated energy consumption is based on the at least one energy consumption estimate.

4. The network node of any of the preceding claims, wherein the at least one network management related configuration comprises timing and/or a location in association with carrying out the at least one operation in a plurality of inter-related machine learning operations for network management.

5. The network node of any of the preceding claims, wherein the plurality of inter-related machine learning operations are part of a machine learning process based on at least one machine learning model for network management, the at least one network management related configuration comprises at least one of the following:
one or more parameters of the machine learning model to be updated, an instruction to trigger retraining of the machine learning model, an instruction to trigger inference of the machine learning model, an instruction to trigger training data collection for the machine learning model, an instruction to trigger inference data collection for the machine learning model, an instruction to replace the machine learning based model by another machine learning based model, and an instruction to stop execution of one or more of the plurality of inter-related machine learning operations.

6. The network node of any of the preceding claims, wherein the one or more of the plurality of inter-related machine learning operations comprises at least one of the following:

updating at least one parameter of at least one of the plurality of inter-related machine learning operations,
triggering at least one of the plurality of inter-related machine learning operations, and
deactivating execution of at least one of the plurality of inter-related machine learning operations.

7. The network node of any of the preceding claims, further comprising means, as an option to the determining the at least one network management related configuration, for:

transmiting the at least one energy consumption estimate to a network management entity, and

receiving the at least one network management related configuration from the network management entity.

8. The network node of any of the preceding claims, further comprising means for:
controlling validity of the at least one energy consumption estimate by using an associated timestamp.

9. A user equipment comprising means for:

receiving, from a network node, at least one measurement configuration for carrying out one or more measurements for determining at least one energy consumption estimate for at least one operation in a plurality of inter-related machine learning operations for network management, wherein the plurality of inter-related machine learning operations comprises (i) one or more operations for collecting data, (ii) one or more data transfer operations to transmit the collected data to the network node, and (iii) one or more data storage operations to store the collected data and (iv) one or more data processing operations to process the collected data, and

carrying out one or more measurements in association with the at least one measurement configuration, and transmit, to the network node, at least one message comprising information on the one or more measurements, or

determining at least one energy consumption estimate using information obtained by the one or more measurements and transmit, to the network node, at least one message comprising information on the determined at least one energy consumption estimate.

10. The user equipment of claim 9, further comprising means for:
determining or receive at least one network management related configuration for carrying out one or more of the plurality of inter-related machine learning operations on the basis of the at least one energy consumption estimate for controlling energy consumption.

11. The user equipment of claim 10, wherein the at least one network management related configuration is determined on the basis of on a net energy balance between (i) an accumulated energy consumption estimated for executing one or more of the plurality of inter-related machine learning operations and (ii) energy saved by at least one action carried out based on at least one output of at least one of the inter-related machine learning operations, wherein the accumulated energy consumption is based on the at least one energy consumption estimate.

12. The user equipment of any of claims 9 to 11, wherein the at least one network management related configuration comprises timing and/or a location in association with carrying out the at least one operation in a plurality of inter-related machine learning operations for network management, and
wherein the plurality of inter-related machine learning operations are part of a machine learning process based on a machine learning model for network management, the at least one network management related configuration comprises at least one of the following:
one or more parameters of the machine learning model to be updated, an instruction to trigger retraining of the machine learning model, an instruction to trigger inference of the machine learning model, an instruction to trigger training data collection for the machine learning model, an instruction to trigger inference data collection for the machine learning model, an instruction to replace the machine learning based model by another machine learning based model, and an instruction to stop execution of one or more of the plurality of inter-related machine learning operations.

13. The user equipment of any of claims 10-12, further comprising means for:

carrying out the one or more of the plurality of inter-related machine learning operations;
updating at least one parameter of at least one of the plurality of inter-related machine learning operations;
triggering at least one of the plurality of inter-related machine learning operations, and
deactivating execution of at least one of the plurality of inter-related machine learning operations.

14. A method comprising

transmitting, by a network node, at least one measurement configuration to one or more devices for carrying out one or more measurements for determining at least one energy consumption estimate for at least one operation in a plurality of inter-related machine learning operations for network management, wherein the plurality of inter-related machine learning operations comprises (i) one or more operations for collecting data, (ii) one or more data transfer operations to transmit the collected data to the network node, and (iii) one or more data storage operations to store the collected data and (iv) one or more data processing operations to process the collected data;

receiving, from at least one of the one or more devices, at least one message comprising information on the one or more measurements and determining at least one energy consumption estimate using the received information, or

receiving, from at least one of the one or more devices, at least one message comprising at least one energy consumption estimate determined using the one or more measurements; and

determining at least one network management related configuration for carrying out one or more of the plurality of inter-related machine learning operations on the basis of the at least one energy consumption estimate for controlling energy consumption.

**15.** A method comprising

receiving, by a user equipment from a network node, at least one measurement configuration to one or more devices for carrying out one or more measurements for determining at least one energy consumption estimate for at least one operation in a plurality of inter-related machine learning operations for network management, wherein the plurality of inter-related machine learning operations comprises (i) one or more operations for collecting data, (ii) one or more data transfer operations to transmit the collected data to the network node, and (iii) one or more data storage operations to store the collected data and (iv) one or more data processing operations to process the collected data; and

carry out one or more measurements in association with the at least one measurement configuration, and transmit, to the network node, at least one message comprising information on the one or more measurements, or

determine at least one energy consumption estimate using information obtained by the one or more measurements and transmit, to the network node, at least one message comprising information on the determined at least one energy consumption estimate.

FIG. 1

FIG. 2

FIG. 3A

FIG. 3B

FIG. 4

EP 4 576 702 A1

FIG. 5

| UE | | NG-RAN node 1 | NG-RAN node 2 | OAM(SMO) |

⟨ AI/ML Model Management Initialization ⟩

Training data collection, storage and transfer

loop [{during training data collection period}]

1 Measurement Configuration

2 Estimate and log E(D0,AS,N1,U1) (UE training data trigger energy)

3 Measurement(s)

4 Measure and log E(D1,0,U1,U1) (UE training data collection energy)

5 UE measurement report

6 Estimate and log E(D2,AS,U1,N1) (UE training data transfer energy)

7 Store UE measurement report with timestamps (UE training data)

8 Estimate and log E(D3,0,U1,U1) (UE training data storage energy)

9 UE energy report (UE training data collection, transfer and storage energies)

10 Store UE energy report with timestamps

FIG. 6A

11 Input data for Model Training

12 Estimate and log E(D4,O1,N1,S1) (NG-RAN node 1 training data transfer energy)

13 Input data for Model Training

14 Estimate and log E(D4,O1,N2,S1) (NG-RAN node 2 training data transfer energy)

15 NG-RAN node energy report (UE and NG-RAN node 1 training data collection, storage and transfer energy)

16 NG-RAN node energy report (UE and NG-RAN node 2 training data collection, storage and transfer energy)

17 Store NG-RAN node energy reports with timestamps

| NG-RAN node 1 | NG-RAN node 2 | OAM(SMO) |

FIG. 6B

| UE | NG-RAN node 1 | NG-RAN node 2 | OAM(SMO) |

AI/ML Model Management Initialization

Training data collection, storage and transfer

Model Training, deployment/update and storage

1 Mode training data preparation

2 Measure and log E(D5,0,S1,S1) (training data preparation energy)

3 Model Training

4 Measure and log E(M1,0,S1,S1) (model training energy)

5 Model Storage with timestamps

6 Model Deployment/Update

7 Estimate and log E(M2,0,S1,S1) (model deployment/update energy)

8 Model Storage with timestamps

| UE | NG-RAN node 1 | NG-RAN node 2 | OAM(SMO) |

FIG. 7

EP 4 576 702 A1

| UE | | NG-RAN node 1 | | NG-RAN node 2 | | OAM(SMO) |

AI/ML Model Management Initialization

Training data collection, storage and transfer

Model Training, deployment/update and storage

Inference data collection, storage and transfer, model inference

loop [{until next model training cycle}]

1 UE measurement report

2 Estimate and log E(D7,AS,U1,N1)
  (UE inference data transfer energy)

3 Store UE measurement report with
  timestamps (UE inference data)

4 Measure and log E(D6,0,U1,U1)
  (UE inference data collection energy)

5 Estimate and log E(D8,0,U1,U1)
  (UE training data storage energy)

6 UE energy reports (UE inference data
  collection, transfer and storage energies)

7 Store UE energy report with timestamps

8 Input data for energy saving model
  inference

9 Store inference data with timestamps

FIG. 8A

| UE | NG-RAN node 1 | NG-RAN node 2 | OAM(SMO) |

10 Estimate and log E(D9,Xn,N2,N1)
(inference data transfer)

11 NG-RAN node energy report(NG-RAN node 2 inference data collection, storage and transfer energy )

12 Store NG-RAN node energy report with timestamps

13 Model inference data preparation

14 Measure and log E(D10,0,N1,N1) (inference data preparation energy)

15 Model Inference

16 Measure and log E(M4,0,N1,N1) (model inference energy)

17 NG-RAN node energy report(inference data collection, preparation, storage and transfer energy )

18 Store NG-RAN node energy report with timestamps

FIG. 8B

Network Energy Saving Action and corresponding estimate of energy $E_{A1}$

19 Estimate and log E(D4,0,N1,N1)
(feedback data preparation)

20 Feedback

*18A*

21 Estimate and log E(D4,0,N1,S1)
(feedback data transfer)

22 Store Feedback with timestamps

Estimate and log E(D4,0,N2,N2)
23 (feedback data preparation)

24 Feedback

Estimate and log E(D4,0,N2,S1)
25 (feedback data transfer)

26 Store Feedback with timestamps

| UE | NG-RAN node 1 | NG-RAN node 2 | OAM(SMO) |

FIG. 8C

FIG. 9A

| UE | NG-RAN node 1 | NG-RAN node 2 | OAM(SMO) |

8 Estimate and log E(D14,0,U1,U1) (UE ground truth data storage energy)

9 UE energy report (UE ground truth data collection, transfer and storage energies)

10 Store UE energy report with timestamps

11 Input data for energy saving model ground truth verification

12 Estimate and log E(D15,Xn,N2,N1) (ground truth data transfer)

13 Inference data Storage with timestamps

14 NG-RAN node energy report(NG-RAN node 2 ground truth data collection, storage and transfer energy)

15 Store NG-RAN node energy report with timesramps

16 Ground truth data preparation

17 Measure and log E(D16,0,N1,N1) (ground truth data preparation energy)

FIG. 9B

EP 4 576 702 A1

18 Model Performance Feedback preparation (ground truth verification against the inference)

19 Measure and log E(M5,0,N1,N1) (Model Performance Feedback preparation energy)

20 Model Performance Feedback

21 Estimate and log E(M6,O1,N1,S1) (Model Performance Feedback transfer energy)

22 NG-RAN node energy report (ground truth data collection, preparation, storage and transfer energy, Model Performance Feedback preparation and transfer energy )

23 Store NG-RAN node energy report with timestamp

| UE | NG-RAN node 1 | NG-RAN node 2 | OAM(SMO) |

FIG. 9C

SMO

OAM

Energy Accounting Function

Next model training cycle is about to start

1 Request net energy saving/loss computation (key="model id")

2 Collection model id related data part (D0 to D16), model part (M1 to M6) and actor part (A1) energies and energy saving Q2 for this training cycle

3 Compute total energy consumed Q1

4 Compute net energy balance Q3

5 Report net energy balance Q3

6 Store, process Q3, determine and trigger corrective action(s)

OAM

Energy Accounting Function

FIG. 10

transmit at least one measurement configuration to one or more devices for carrying out one or more measurements for determining at least one energy consumption estimate for at least one operation in a plurality of inter-related machine learning operations for network management ⟿1110

receive, from at least one of the one or more devices, at least one message comprising information on the one or more measurements and determine at least one energy consumption estimate using the received information ⟿1120

receive, from at least one of the one or more devices, at least one message comprising at least one energy consumption estimate determined using the one or more measurements ⟿1130

determine at least one network management related configuration for carrying out one or more of the plurality of inter-related machine learning operations on the basis of the at least one energy consumption estimate for controlling energy consumption ⟿1140

Carry out at least one action for controlling energy consumption on the basis of the at least one network management related configuration ⟿1150

FIG. 11

receive, from a network node, at least one measurement configuration for carrying out one or more measurements for determining at least one energy consumption estimate for at least one operation in a plurality of inter-related machine learning operations for network management ~1210

carry out one or more measurements in association with the at least one measurement configuration, and transmit, to the network node, at least one message comprising information on the one or more measurements 1220

determine at least one energy consumption estimate using information obtained by the one or more measurements and transmit, to the network node, at least one message comprising information on the determined at least one energy consumption estimate 1230

determine at least one network management related configuration for carrying out one or more of the plurality of inter-related machine learning operations on the basis of the at least one energy consumption estimate for controlling energy consumption ~1240

Carry out at least one action for controlling energy consumption on the basis of the at least one network management related configuration ~1250

FIG. 12

FIG. 13

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "3rd Generation Partnership Project; Technical Specification Group Radio Access Network; Evolved Universal Terrestrial Radio Access (E-UTRA) and NR; Study on enhancement for Data Collection for NR and EN-DC (Release 17)", 3GPP STANDARD; TECHNICAL REPORT; 3GPP TR 37.817, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. V17.0.0 6 April 2022 (2022-04-06), pages 1-23, XP052146515, Retrieved from the Internet: URL:https://ftp.3gpp.org/Specs/archive/37_series/37.817/37817-h00.zip 37817-h00.doc [retrieved on 2022-04-06] * Points 1 to 5.1.2.7; page 5 - page 12 * | 1-15 | INV. H04L41/0894 H04L41/14 H04L41/16 H04L43/04 H04L41/084 |
| | ----- | | **TECHNICAL FIELDS SEARCHED (IPC)** |
| X | US 2022/129057 A1 (TSAI CHIA-HUNG [TW]) 28 April 2022 (2022-04-28) * the whole document * ----- | 1-15 | H04L |

The present search report has been drawn up for all claims

| Place of search | Date of completion of the search | Examiner |
|---|---|---|
| Munich | 14 February 2025 | García Bolós, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 9780

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2025

| Patent document cited in search report | Publication date | Patent family member(s) | Publication date |
|---|---|---|---|
| US 2022129057 A1 | 28-04-2022 | EP 4232880 A1 | 30-08-2023 |
| | | US 2022129057 A1 | 28-04-2022 |
| | | WO 2022086614 A1 | 28-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Data Collection Reporting. *3GPP TS38.423*

- Study on enhancement for Data Collection for NR and EN-DC (Release 17). *3GPP document TR 37.817*, April 2022